(19) **Europäisches Patentamt**
**European Patent Office**
**Office européen des brevets**

(11) **EP 2 501 172 B1**

(12) **EUROPEAN PATENT SPECIFICATION**

(45) Date of publication and mention
of the grant of the patent:
**25.10.2017 Bulletin 2017/43**

(51) Int Cl.:
**H04W 24/02** *(2009.01)* **H04W 24/04** *(2009.01)*

(21) Application number: **10829778.9**

(22) Date of filing: **15.09.2010**

(86) International application number:
**PCT/JP2010/065899**

(87) International publication number:
**WO 2011/058818 (19.05.2011 Gazette 2011/20)**

(54) **WIRELESS COMMUNICATION SYSTEM, AUTONOMOUS OPTIMIZATION SYSTEM, WIRELESS BASE STATION, AND WIRELESS PARAMETER SETTING METHOD**

DRAHTLOSES KOMMUNIKATIONSSYSTEM, AUTONOMES OPTIMIERUNGSSYSTEM, DRAHTLOSE BASISSTATION UND VERFAHREN ZUR EINSTELLUNG VON DRAHTLOSPARAMETERN DAFÜR

SYSTÈME DE COMMUNICATION SANS FIL, SYSTÈME D'OPTIMISATION AUTONOME, STATION DE BASE SANS FIL ET PROCÉDÉ DE RÉGLAGE DES PARAMÈTRES SANS FIL

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **11.11.2009 JP 2009258055**

(43) Date of publication of application:
**19.09.2012 Bulletin 2012/38**

(73) Proprietor: **NEC Corporation**
**Tokyo 108-8001 (JP)**

(72) Inventor: **WATANABE, Yoshinori**
**Tokyo 108-8001 (JP)**

(74) Representative: **MacDougall, Alan John Shaw et al**
**Mathys & Squire LLP**
**The Shard**
**32 London Bridge Street**
**London SE1 9SG (GB)**

(56) References cited:
**WO-A1-97/32445** **WO-A1-2008/025874**
**WO-A1-2009/096883** **JP-A- 2003 259 433**
**JP-A- 2006 222 651** **JP-A- 2008 153 963**
**US-A1- 2009 264 130**

# Description

## TECHNICAL FIELD

The present invention relates to a radio communication system, a self-optimizing system, a radio base station, and a radio parameter setting method that set radio parameters on a radio base station.

## BACKGROUND ART

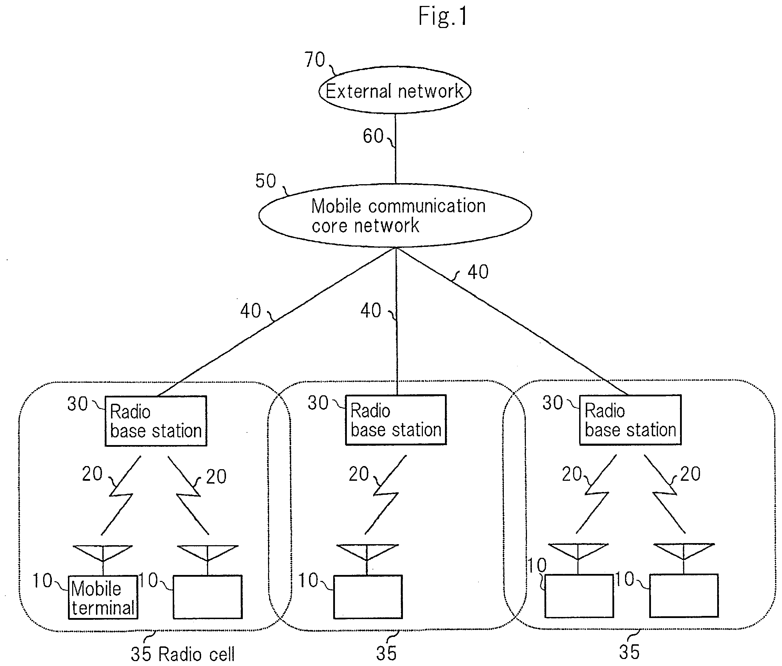

Generally, a radio communication system has mobile terminals 10, radio base stations 30, and mobile communication core network 50 as shown in Fig. 1.

Mobile terminal 10 transmits and receives data such as communication traffic and control traffic to and from radio base station 30.

Radio base station 30 transmits and receives data to and from mobile terminals 10 and mobile communication core network 50 connected through wired links 40. Around radio base station 30, radio cell 35 is arranged as an effective range in which mobile terminals 10 each have radio link 20 with radio base station 30. Radio base station 30 manages radio cell 35 arranged in its own periphery, whereas mobile terminal 10 establishes a connection with radio cell 35 that radio base station 30 manages and transmits and receives data to and from radio base station 30.

Mobile communication core network 50 is composed of an exchanger and a server machine (not shown) and is connected to radio base stations 30 through respective wired links 40 and is connected to external network 70 through wired link 60 so as to transmit and receive data to and from radio base stations 30 and external network 70.

In such a radio communication system, radio parameters of radio base station 30 need to be appropriately set up so as to satisfy predetermined communication qualities in all the service areas in which services are provided. Examples of such radio parameters are total transmission powers of radio base stations 30, tilt angles on the vertical and horizontal planes of a radio base station antenna, a neighbor cell list, and a handover threshold.

In the following description, it is assumed that as radio parameters, a neighbor cell list and a handover threshold are set on radio base station 30.

First, the neighbor cell list will be described.

In the radio communication system, radio cells are arranged on the plane of all the service area so as to provide services.

When mobile terminal 10 moves from the connected radio cell to another radio cell (neighbor cell), mobile terminal 10 performs a so-called handover, which is a process that switches the connected radio cell to another radio cell. In this process, mobile terminal 10 is pre-instructed to report measured radio channel quality of the connected radio cell and the neighbor cells to radio base station 30 that manages the connected radio cell if the radio channel quality of the connected radio cell deteriorates. When the radio channel quality is reported from mobile terminal 10 to radio base station 30, radio base station 30 determines a handover destination radio cell.

To reduce the load imposed on mobile terminal 10 and process the handover quickly, a method that measures the radio channel quality of only the connected radio cell of mobile terminal 10 and the neighbor cells to which neighbor the cell mobile terminal 10 establishes a connection is generally used. The neighbor cell list shows radio cells whose radio channel quality is to be measured and reported by mobile terminals 10 placed under control of radio base station 30. The neighbor cell list is generated when a communication carrier registers radio cells to each radio cell, and the neighbor cell list is reported to mobile terminals 10 by radio base station 30 through a downlink channel.

Radio base station 30 determines a handover destination radio cell from the radio cells whose radio channel quality has been reported by mobile terminal 10. Therefore, mobile terminal 10 cannot perform a handover to radio cells whose radio channel qualities have not been reported to radio base station 30 by mobile terminal 10. Consequently, if radio cells have been omitted from the neighbor cell list, since mobile terminal 10 cannot perform a handover to an appropriate radio cell, a call may be abnormally terminated or a handover to an inappropriate radio cell may result in deterioration of communication qualities. Thus, it is important to generate a neighbor cell list in which radio cells have not been omitted so as to ensure good communication qualities.

On the other hand, an upper limit of the number of radio cells that can be registered to a neighbor cell list has been set up so as to reduce the load imposed on a channel through which the neighbor cell list is reported and in order to reduce the load imposed on mobile terminal 10 that needs to measure radio channel qualities of radio cells and report them to radio base station 30. Thus, it is necessary to preferentially register radio cells that are likely to contribute to an improvement of communication qualities to the neighbor cell list so as to register major radio cells to the neighbor cell list.

Next, the handover threshold will be described.

Generally, when a deterioration in radio channel quality of a connected radio cell is reported from mobile terminal 10 to radio base station 30, the condition for determining the presence or absence of a trigger is given by Expression (1).

[Mathematical expression 1]

$$P_s + O_s < P_t + O_t \qquad (1)$$

where Ps and Pt are received powers of pilot signals transmitted from radio base station 30 that manages a connected radio cell and radio base station 30 that manages a neighbor cell, respectively. Os and Ot are offset values of received powers where Os is applied to the received power of the pilot signal transmitted from radio base station 30 that manages the connected radio cell, whereas Ot is applied to the received power of the pilot signal transmitted from neighbor base station 30. Ot may be set to a value that differs in each neighbor cell.

Expression (1) is rephrased to Expression (2)

[Mathematical expression 2]

$$\begin{cases} P_t - P_s > Th_{HO} \\ Th_{HO} = O_s - O_t \end{cases} \qquad (2)$$

the parameter $Th_{HO}$ may be referred to as a handover determination threshold (handover threshold). The handover threshold is used by mobile terminal 10 to determine whether to report the radio channel quality of the connected radio cell and neighbor cell. A larger difference between the radio channel quality of the connected radio cell and the radio channel quality of the neighbor cell than the handover threshold triggers reporting the radio channel quality.

If the handover threshold is not set appropriately, there may be a delay in the timing for mobile terminal 10 to report the radio channel quality. Consequently, mobile terminal 10 may fail to report the radio channel quality of a handover candidate neighbor cell to radio base station 30 before mobile terminal 10 reaches the position at which a handover is needed. This could cause a delay in performing a handover, resulting in abnormal disconnection of communication. Also, there can be a case where a neighbor cell whose radio channel quality has increased temporarily is determined to be a handover candidate and radio channel quality of the neighbor cell declines right after handover to the neighbor cell, resulting in an abnormal disconnection of communication. Therefore, in order to ensure high communication quality, how to set the handover threshold that will enable a handover to be performed at an appropriate position, by adjusting a determining factor, such as offset values Os and Ot, of a radio parameter is important.

Specific example of a method for setting radio parameters will be described below.

As a method for setting radio parameters, a method (first method) that uses a radio area design tool (design tool) is generally known.

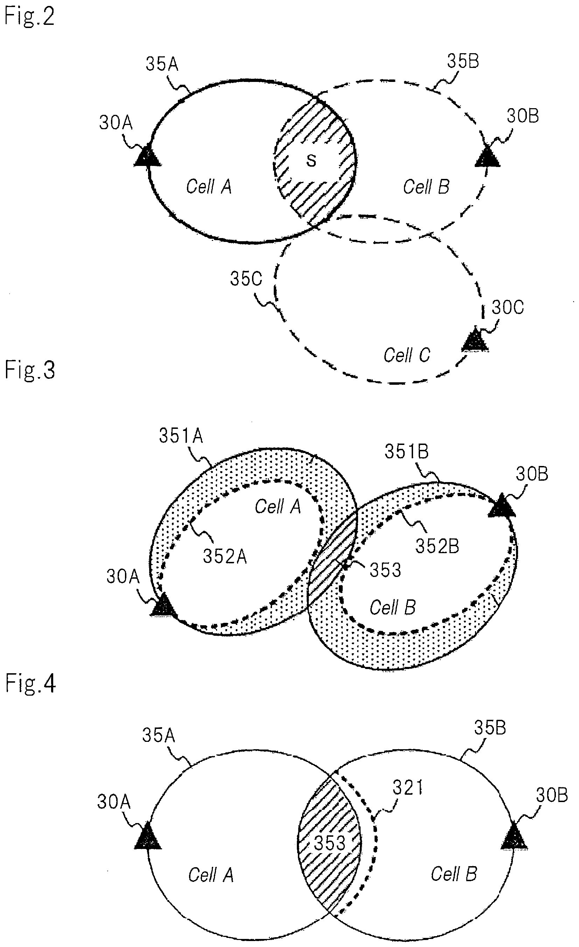

Fig. 2 is a diagram for illustrating a method for generating a neighbor cell list that is set as a radio parameter by the first method.

Referring to Fig. 2, to generate a neighbor cell list of radio cell 35A (Cell A) managed by radio base station 30A, the first method extracts radio base stations 30B and 30C located within a certain distance range from radio base station 30A. Then, the first method calculates overlap areas of the coverage (geographical scopes of radio cells 35) of radio cells 35B (Cell B) and 35C (Cell C) managed, respectively, by radio base stations 30B and 30C and the coverage of radio cell 35A.

In Fig. 2, the coverage of radio cell 35A and the coverage of radio cell 35B overlap each other (overlap area S), and consequently radio cell 35B is regarded as a neighbor cell of radio cell 35A. On the other hand, the coverage of radio cell 35A and the coverage of radio cell 35C do not overlap each other, and consequently radio cell 35C is not regarded as a neighbor cell of radio cell 35A.

Then, the neighbor cells of radio cell 35A are registered in a neighbor cell list in descending order of the overlap area up to an upper limit of the number of radio cells that can be registered to the neighbor cell list. The resulting neighbor cell list is provided in radio base station 30A.

The overlap area of coverage can be calculated by a coverage estimation function of the design tool.

In an area design stage, the handover threshold that is set as a radio parameter by the first method has the same value for all the radio cells in a service area.

In this way, the first method can set the neighbor cell list and the handover threshold as radio parameters.

However, the neighbor cell list and the handover threshold set by the first method may have defects.

Fig. 3 is a diagram for illustrating a problem with the method for generating a neighbor cell list by the first method.

When coverage 351A and coverage 351B of radio cell 35A (Cell A) managed by radio base station 30A and radio cell 35B (Cell B) managed by radio base station 30B are estimated in first method, estimated coverage 352A and estimated coverage 352B may be smaller than real coverage 351A and real coverage 351B due to estimation errors. Consequently, even when real coverage 351A and real coverage 351B have overlap area 353 to some degree, if estimated coverage 352A and estimated coverage 352B do not overlap, radio cells 35A and 35B are not regarded as neighbor cells that are in the vicinity of each other, resulting in an omission from registration in the neighbor cell list.

Also, Fig. 4 is a diagram for illustrating a problem with a handover threshold that is set by the first method.

In Fig. 4, mobile terminal 10 (not shown) connected to radio cell 35B attempts a handover to radio cell 35A. In this case, if the handover threshold is set to a fixed value as with the first method, when overlap area 353 of coverage of radio cell 35A and coverage of radio cell 35B managed, respectively, by radio base stations 30A and 30B are small, handover position 321 can be located outside overlap area 353. Then, the handover will be performed too early, resulting in an abnormal disconnection of communication.

Also, depending on the set value of the handover threshold, the handover will be performed too late. In such a case, communication will be disconnected abnormally as well.

In this way, the neighbor cell list and the handover threshold set as radio parameters by the first method may have defects.

To deal with defects of the radio parameters set by the first method, the radio parameters need to be corrected as appropriate after the area design if any defects are revealed by field testing.

Thus, in recent years, as disclosed in Non Patent Literature 1 and Non Patent Literature 2, an autonomous system that autonomously optimizes radio parameters has been under consideration.

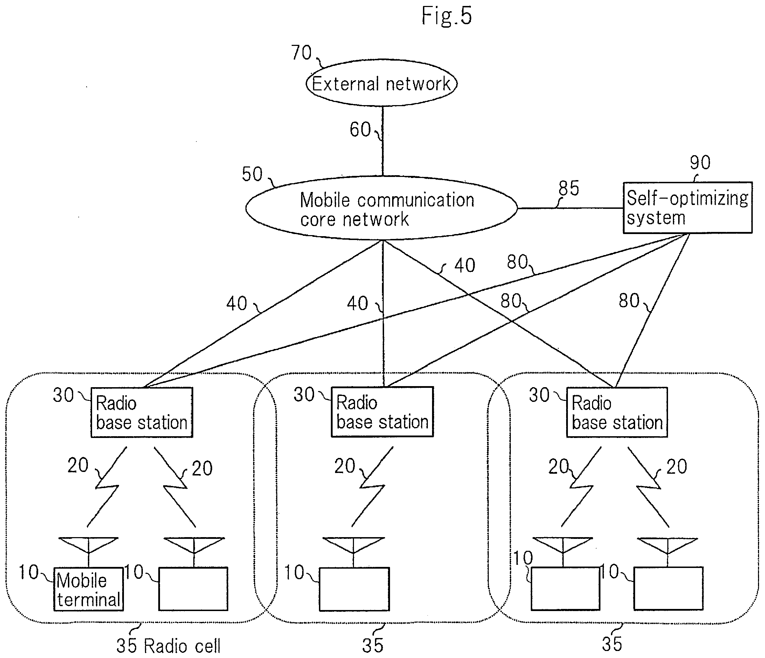

Fig. 5 is a schematic diagram showing an example of a structure of a radio communication system that is provided with a self-optimizing system.

The radio communication system shown in Fig. 5 has mobile terminals 10, radio base stations 30, mobile communication core network 50, and self-optimizing system 90. In Fig. 5, similar components to those in Fig. 1 are denoted by similar reference numeral and their description will be omitted in the following.

Self-optimizing system 90 is connected to radio base stations 30 through wired links 80 and to mobile communication core network 50 through wired link 85. Self-optimizing system 90 controls an exchanger and a server machine in mobile communication core network 50 as well as radio base station 30.

Non Patent Literature 1 describes a method (second method) for autonomously optimizing and updating a neighbor cell list to be set as a radio parameter in a radio communication system provided with a self-optimizing system.

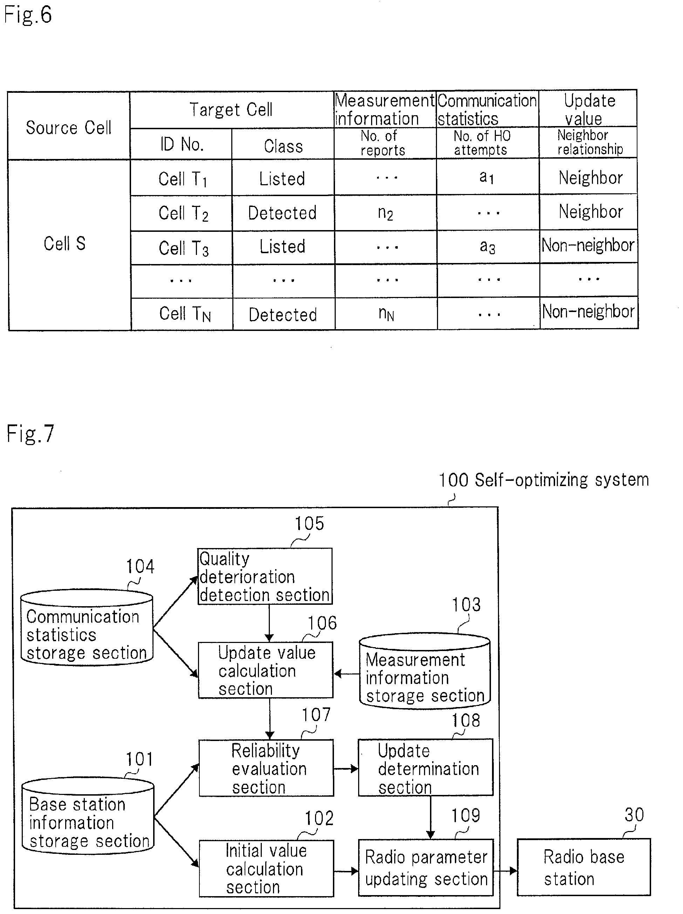

Fig. 6 is a schematic diagram for illustrating a method for generating a neighbor cell list by the second method.

The self-optimizing system described in Non Patent Literature 1 tabulates the number of handover attempts (a) to each radio cell (Listed Cell) registered in the neighbor cell list, as a handover destination. In addition, the self-optimizing system described in Non Patent Literature 1 tabulates the number of reports (n) from mobile terminals stating that the received power of a pilot signal is equal to or higher than a threshold regarding each radio cell (Detected Cell) unregistered in the neighbor cell list.

Based on the tabulated results, the self-optimizing system described in Non Patent Literature 1 registers a predetermined number of radio cells in which the number of reports (n) is equal to or larger than a threshold in the neighbor cell list out of the Detected Cells in descending order of the number of reports (n), and removes the Listed Cells in which the number of attempts (a) is a small proportion, i.e., a proportion equal to or smaller than a threshold in the total number of attempts of all the neighbor cells, from the existing neighbor cell list, and thereby updates the neighbor cell list that is a radio parameter.

RELATED ART LITERATURE

Non Patent Literature 1: D. Soldani, "Self-optimizing Neighbor Cell List for UTRA FDD Networks Using Detected Set Reporting", pp.694-pp.698, IEEE VTC2007.

Non Patent Literature 2: 3GPP TR 36.902 v1.2.0: "Radio Access Network (E-UTRAN); Self-configuring and self-optimizing network use cases and solutions"

WO 97/32445 A1 discloses a method and apparatus for adaptively reconfiguring a neighbor cell list. For a selected cell of a cellular system, data associated with the selected cell and each of a plurality of neighboring base stations is collected. The collected data includes data on events indicative of the quality of hand offs from the selected cell to each of the neighboring base stations. The collected data also includes signal level measurements made on measurement channels of the neighboring base stations. A plurality of quality values, each associated with the selected cell and one of the neighboring cells, are then determined from the collected data. A neighbor cell list is then generated for the selected cell by determining the highest quality values, and placing the hand off measurement channels of the neighboring cells associated with the highest quality values in the neighbor cell list.

WO 2009/096883 A1 discloses teachings to enable a user terminal to perform a fast recovery from a radio link failure. Improvement in recovery time is achieved by commanding the user terminal to perform radio link failure (RLF) recovery at a cell that is known to possess the user context, while considering that this cell should yield good radio conditions (if not the best) to the user terminal. A cell may be predefined for use by the user terminal in recovering its radio connection. Based on providing signal strength thresholds to the user terminal, for use in determining whether to use a predefined cell for reconnecting to the network, the user terminal attempts RLF recovery first in the predefined cell.

DISCLOSURE OF THE INVENTION

However, with the second method, if a radio cell connected with a small number of mobile terminals has an uneven geographical or temporal distribution of mobile terminals, the radio parameters set on the radio base station that manages the radio cell may get updated based on local or temporary actual measurement information. In such a case, there is a problem in that even if the radio parameters are updated based on local or temporary actual measurement information, the distribution of mobile terminals often varies greatly before and after the update, which may result in a failure to improve the communication quality.

To avoid this problem it is reasonable not to update the radio parameters until the total number of mobile terminals connected to the radio cell or the number of reports from mobile terminals are increased, but this method has a problem in that deterioration of communication quality due to defects in the set values of the radio parameters can become prolonged.

An object of the present invention is to provide a radio communication system, self-optimizing system, radio base station, and radio parameter setting method that can solve the problems described above.

To accomplish the foregoing object, the present invention provides a first radio communication system comprising: a radio base station that manages a cell, mobile terminals that are connected to the cell and measure radio channel quality of the cell and radio channel quality of specific neighbor cells of neighbor cells that are in the vicinity of the cell, and a self-optimizing system that sets a radio parameter on the radio base station, wherein the self-optimizing system comprises: an update value calculation section that calculates an update value of a determining factor of the radio parameter based on communication traffic statistics information of the cell and the neighbor cells and on radio channel quality information that indicates radio channel quality measured by the mobile terminals; a reliability evaluation section that evaluates the reliability of the update value of the factor calculated by the update value calculation section; an update determination section that determines whether or not to apply the update value of the factor to the radio base station, based on the evaluation result by the reliability evaluation section; and a radio parameter updating section that sets the radio parameter determined by the update value of the factor in the radio base station when a determination is made that the update value of the factor is to be applied to said radio base station. The reliability evaluation section is configured to calculate the reliability of the update value of the factor as an output of an evaluation function that inputs the number of mobile terminals connected to the cell or the number of reports of the radio channel quality information received from the mobile terminals. The update determination section is configured to determine to apply the update value of the factor to said radio base station when the evaluation result by said reliability evaluation section is larger than a predetermined threshold.

To accomplish the foregoing object, the present invention provides a second radio communication system comprising: a radio base station that manages a cell, mobile terminals that are connected to the cell and measure radio channel quality of the cell and radio channel quality of specific neighbor cells of neighbor cells that are in the vicinity of the cell, and a self-optimizing system that sets a radio parameter on the radio base station, wherein the self-optimizing system comprises: an initial value calculation section that calculates an initial value of a determining factor of the radio parameter; an update value calculation section that calculates an update value of the factor based on communication traffic statistics information of the cell and the neighbor cells and on radio channel quality information that indicates radio channel quality measured by the mobile terminals; a reliability evaluation section that evaluates reliability of the initial value of the factor calculated by the initial value calculation section and reliability of the update value of the factor calculated by the update value calculation section; an update determination section that determines applying a weighted average value of the initial value and update value of the factor calculated using the reliability of the initial value and update value of the factor evaluated by the reliability evaluation section to the radio base station; and a radio parameter updating section that sets the radio parameter determined by the weighted average value on the radio base station when a determination is made that the weighted average value is to be applied to said radio base station. The reliability evaluation section is configured to calculate the reliability of the update value of the factor as an output of an evaluation function that inputs the number of mobile terminals connected to the cell or the number of reports of the radio channel quality information received from the mobile terminals.

To accomplish the foregoing object, the present invention provides a self-optimizing system for setting a radio parameter on a radio base station that manages a cell, comprising: an update value calculation section that calculates an update value of a determining factor of the radio parameter based on traffic statistics information of the cell and neighbor cells that are in the vicinity of the cell and on radio channel quality information that indicates radio channel quality of the cell and radio channel quality of specific neighbor cell of the neighbor cells, where the radio channel quality is measured by mobile terminals connected to the cell; a reliability evaluation section that evaluates reliability of the update value of the factor calculated by the update value calculation section; an update determination section that determines whether or not to apply the update value of the factor to the radio base station, based on an evaluation result by the reliability evaluation section; and a radio parameter updating section that sets the radio parameter determined by the update value of the factor in the radio base station when a determination is made that the update value of the factor is to be applied to said radio base station. The reliability evaluation section is configured to calculate the reliability of the update value of the factor as an output of an evaluation function that inputs the number of mobile terminals connected to the cell or the number of reports of the radio channel quality information received from the mobile terminals. The update determination section is configured to determine to apply the update value of the factor to said radio base station when the evaluation result by said reliability evaluation section is larger than a predetermined threshold.

To accomplish the foregoing object, the present invention provides a radio base station for managing a cell and setting a radio parameter of the radio base station itself, comprising: an update value calculation section that calculates an update value of a determining factor of the radio parameter based on traffic statistics information of the cell and neighbor cells that are in the vicinity of the cell and on radio channel quality information that indicates radio channel quality of the cell and radio channel quality of specific neighbor cell of the neighbor cells, where the radio channel quality is measured by mobile terminals connected to the cell; a reliability evaluation section that evaluates reliability of the update value of the factor calculated by the update value calculation section; an update determination section that determines whether or not to apply the update value of the factor to the radio base station itself, based on an evaluation result by the reliability evaluation section; and a radio parameter updating section that sets the radio parameter determined by the update value of the factor in the radio base station itself when a determination is made that the update value of the factor is to be applied to said radio base station. The reliability evaluation section is configured to calculate the reliability of the update value of the factor as an output of an evaluation function that inputs the number of mobile terminals connected to the cell or the number of reports of the radio channel quality information received from the mobile terminals. The update determination section is configured to determine to apply the update value of the factor to said radio base station when the evaluation result by said reliability evaluation section is larger than a predetermined threshold.

To accomplish the foregoing object, the present invention provides a radio parameter setting method that is applied to a self-optimizing system for setting a radio parameter on a radio base station that manages a cell, the radio parameter setting method comprising: calculating an update value of a determining factor of the radio parameter based on traffic statistics information of the cell and neighbor cells that are in the vicinity of the cell and on radio channel quality information that indicates radio channel quality of the cell and radio channel quality of specific neighbor cell of the neighbor cells, where the radio channel quality is measured by mobile terminals connected to the cell; evaluating reliability of the calculated update value of the determining factor; determining whether or not to apply the update value of the factor to the radio base station, based on an evaluation result; and setting the radio parameter determined by the update value of the factor on the radio base station when a determination is made that the update value of the factor is to be applied to said radio base station. The evaluating reliability comprises calculating the reliability of the update value of the factor as an output of an evaluation function that inputs the number of mobile terminals connected to the cell or the number of reports of the radio channel quality information received from the mobile terminals. The determining whether or not to apply the update value comprises determining to apply the update value of the factor to said radio base station when the evaluation result by said evaluating reliability is larger than a predetermined threshold.

According to the present invention, the self-optimizing system calculates an update value of a determining factor of the radio parameter based on traffic statistics information of the cell managed by the radio base station and neighbor cells that are in the vicinity of the cell and on radio channel quality information that indicates radio channel quality of the cell and specific neighbor cell of the neighbor cells, the radio channel quality being measured by a mobile terminal connected to the cell, determines whether or not to apply the update value of the factor to the radio base station, based on the evaluation result of the reliability of the calculated update value of the factor; and sets the radio parameter determined by the update value of the factor on the radio base station when the update value of the factor is determined to be applied.

Thus, even when the geographical distribution of mobile terminals connected to the cell is uneven, since whether or not to apply the update value of the factor to the radio base station can be determined based on the evaluation result of the reliability of the update value of the factor, it is possible to reduce the likelihood that the communication quality may not be improved even if the radio parameter is updated.

Also, since whether or not to apply the update value of the factor to the radio base station can be determined based on the evaluation result of the reliability of the calculated update value of the factor, there is no need to wait until the number of mobile terminals connected to the cell or the number of reports from mobile terminals exceed a predetermined value, and thus deficiencies of the initial value of the radio parameter can be remedied quickly, thereby preventing prolonged deterioration of communication quality.

BRIEF DESCRIPTION OF DRAWINGS

[Fig. 1] is a schematic diagram showing an example of a structure of a typical radio communication system.

[Fig. 2] is a schematic diagram illustrating a method for generating a neighbor cell list by a first method.

[Fig. 3] is a schematic diagram illustrating a problem with the method for generating a neighbor cell list by the first method.

[Fig. 4] is a schematic diagram illustrating a problem with a handover threshold that is set by the first method.

[Fig. 5] is a schematic diagram showing an example of a structure of a radio communication system that is provided with a self-optimizing system.

[Fig. 6] is a schematic diagram illustrating a method for generating a neighbor cell list by a second method.

[Fig. 7] is a block diagram showing a structure of a self-optimizing system according to a first exemplary embodiment.

[Fig 8] is a flowchart illustrating an operation of the self-optimizing system shown in Fig. 7.

[Fig. 9] is a schematic diagram showing an example of management information managed by an update value calculation section shown in Fig. 7.

[Fig. 10] is a flowchart illustrating an operation of the update value calculation section shown in Fig. 7.

[Fig. 11A] 11A is a schematic diagram showing an example of an evaluation function used by a reliability evaluation section shown in Fig. 7 to evaluate reliability of an update value of a neighbor relationship when the update value of the neighbor relationship is "neighbor."

[Fig. 11B] is a schematic diagram showing a function used to determine a threshold for the number of reports needed to return reliability 1 in Fig. 11A.

[Fig. 11C] is a schematic diagram showing an example of an evaluation function used by the reliability evaluation section shown in Fig. 7 to evaluate reliability of an update value of the neighbor relationship when the update value of the neighbor relationship is "non-neighbor."

[Fig. 11D] is a schematic diagram showing a function used to determine a threshold for the number of reports needed to return reliability 1 in Fig. 11C.

[Fig. 12] is a schematic diagram showing an example of management information managed by an update determination section shown in Fig. 7.

[Fig. 13] is a schematic diagram showing an example of management information managed by the update determination section shown in Fig. 7.

[Fig. 14] is a block diagram showing a structure of a self-optimizing system according to a second exemplary embodiment.

[Fig. 15] is a flowchart illustrating an operation of the self-optimizing system shown in Fig. 14.

[Fig. 16A] is a schematic diagram showing an example of an evaluation function used by a reliability evaluation section shown in Fig. 14 to evaluate reliability of an initial value of a neighbor relationship.

[Fig. 16B] is a schematic diagram showing an example of an evaluation function used by the reliability evaluation section shown in Fig. 14 to evaluate reliability of an initial value of an offset value.

[Fig. 17] is a schematic diagram showing an example of management information managed by an update determination section shown in Fig. 14.

[Fig. 18] is a schematic diagram showing an example of management information managed by the update determination section shown in Fig. 14.

[Fig. 19] is a schematic diagram showing an example of management information managed by the update determination section shown in Fig. 14.

[Fig. 20] is a schematic diagram showing an example of management information managed by the update determination section shown in Fig. 14.

[Fig. 21] is a schematic diagram showing an example of management information managed by an update determination section of a self-optimizing system according to a third exemplary embodiment.

EXEMPLARY EMBODIMENTS

Next, with reference to the accompanying drawings, exemplary embodiments will be described.

In the following, an example in which a self-optimizing system in the radio communication system according to the present invention shown in Fig. 5 sets radio parameters on radio base station 30 will be described. Thus, similar components to those shown in Fig. 2 are denoted by similar reference numerals and their description will be omitted in the following.

The present invention is not limited to the radio communication system shown in Fig. 5. Instead, without departing from the scope of the present invention, the present invention may be applied to a radio communication system that is provided with a radio base station control device arranged between mobile communication core network 50 and radio base station 30 and also applied to a radio communication system where the function of the self-optimizing system is incorporated in a radio based station control device or radio base station 30. In addition, the present invention may be also applied to the case in which a radio base station management device is arranged between the self-optimizing system and radio base station 30.

Besides, hereinafter the term "radio parameter(s)" is used to mean the neighbor cell list or the handover threshold or both. The neighbor cell list is determined using a neighbor relationship between radio cells as a factor while the handover threshold is determined using an offset value in Expression (1) as a factor. In this way, since the neighbor relationship and the offset value are determining factors of radio parameters, description will be given below mainly of how to determine the neighbor relationship between radio cells and how to determine the offset value in Expression (1). Incidentally, although in the example described below, the neighbor relationship (neighbor or non-neighbor) between radio cells and the offset value in Expression (1) are managed by the self-optimizing system, these factors may be managed inside the radio base station control apparatus or radio base station 30.

(First exemplary embodiment)

Fig. 7 is a schematic diagram showing a structure of self-optimizing system 100 according to a first exemplary embodiment of the present invention.

Self-optimizing system 100 shown in Fig. 7 has base station information storage section 101, initial value calculation section 102, measurement information storage section 103, communication statistics storage section 104, quality deterioration detection section 105, update value calculation section 106, reliability evaluation section 107, update determination section 108, and radio parameter updating section 109.

Base station information storage section 101 is a region that stores radio base station information about radio area design. Specific examples of the radio base station information include information about the installation position of radio base station 30 and total transmit power of radio base station 30, gain and installation direction of a radio base station antenna, and features around radio base station 30 such as geography, building structure, and building layout.

Initial value calculation section 102 acquires radio base station information about a radio cell managed by radio base station 30 from base station information storage section 101 and calculates the initial value of a determining factor of a radio parameter.

Measurement information storage section 103 is a region that stores measurement information of radio channel quality measured by mobile terminals 10 connected to a radio cell managed by radio base station 30. Specific examples of measurement information of radio channel quality include information of received powers of pilot signals transmitted from a connected radio cell and neighbor cells measured by each mobile terminal 10 and the signal-to-interference ratio between the pilot signal transmitted from the connected radio cell and the neighbor cells.

Communication statistics storage section 104 is a region that stores communication traffic statistics information with respect to the operating radio communication system, where the communication traffic is measured by radio base stations 30. Specific examples of traffic statistics information include statistics of individual radio cell such as the number of handover attempts to each radio cell serving as a handover destination cell or the number of handover failures classified by cause of failure. Incidentally, the number of handover failures classified by cause of failure can be counted by identifying cause of failure such as premature handovers or belated handovers based on communication history information on mobile terminals 10, for example, using the method described in Non Patent Literature 2.

Quality deterioration detection section 105 computes factors such as handover failure rate based on the traffic statistic information stored in communication statistic storage section 101, thereby detects any radio cell whose radio channel quality has deteriorated, and designates the detected radio cell as a cell to be optimized. The radio parameter is updated for radio base station 30 that manages the radio cell designated as a cell to be optimized.

Update value calculation section 106 calculates an update value of a factor for the cell to be optimized based on the measurement information of radio channel quality of the cell to be optimized and the traffic statistics information about the cell to be optimized, where the measurement information is acquired from measurement information storage section 103 and the traffic statistics information is acquired from communication statistics storage section 104.

Reliability evaluation section 107 evaluates the reliability of the factor's update value calculated by update value calculation section 106. Reliability evaluation section 107 acquires the measurement information of radio channel quality and the traffic statistics information used in calculating the update value from update value calculation section 106 and evaluates the reliability of the update value by means of an evaluation function specific to each radio cell using the acquired information as an input.

Update determination section 108 determines whether or not to actually apply the update value of the factor to radio base station 30 based on an evaluation result by reliability evaluation section 107 concerning the reliability of the factor's update value.

When update determination section 108 makes a determination that the update value of the factor is to be applied to radio base station 30, radio parameter updating section 109 determines a radio parameter based on the factor's update value and sets the radio parameter on radio base station 30.

Next, operation of self-optimizing system 100 will be described.

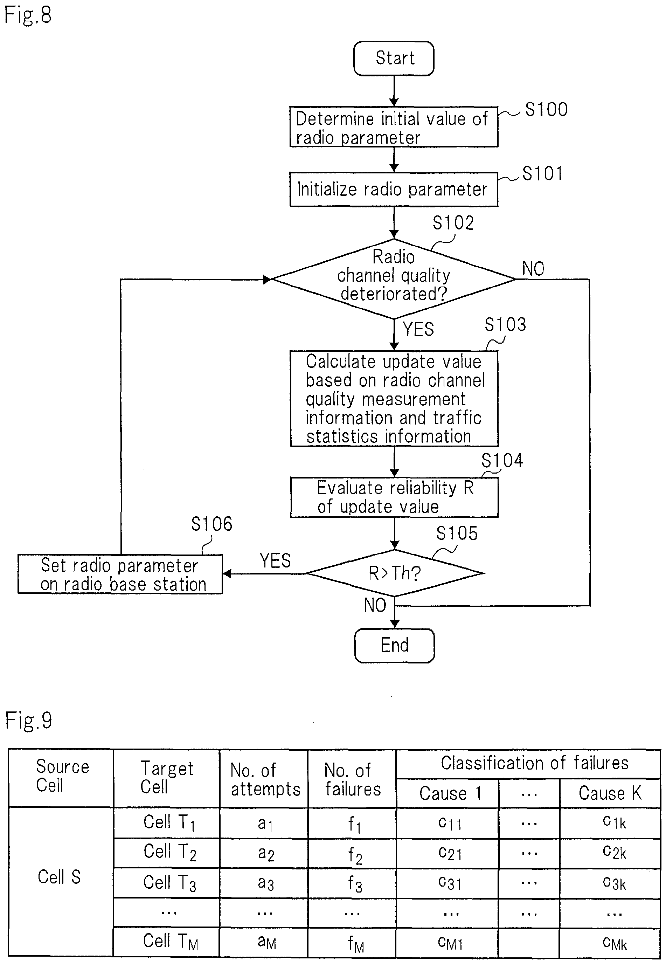

Fig. 8 is a flowchart illustrating the operation of self-optimizing system 100.

Initial value calculation section 102 calculates an initial value of each factor for the radio cell managed by each radio base station 30. Radio parameter updating section 109 determines an initial value of the radio parameter based on the calculated initial value of the factor (at step S100). Then, radio parameter updating section 109 sets the initial value of the radio parameter on radio base station 30 (at step S101).

In step S100, the initial value of the factor can be calculated by the first method. For example, the initial value of a neighbor relationship between radio cells can be calculated by identifying a neighbor cell based on overlap areas of the coverage of a cell and the coverage of radio cells around the radio cell. Alternatively, the initial value can be calculated by selecting radio base stations 30 close to radio base station 30 that manages the radio cell in order of increasing distance and then by regarding the radio cells managed by selected radio base stations 30 as neighbor cells.

On the other hand, regarding the offset value, the same initial value can be used across the entire radio communication system.

Also, according to this exemplary embodiment, the determining the initial values of the radio parameters in step S100 is not essential, and if step S100 is omitted, an empty neighbor cell list that does not contain any neighbor cell and a handover threshold set to a fixed value are provided in radio base stations 30 as radio parameters.

Quality deterioration detection section 105 acquires traffic statistic information from communication statistic storage section 104 and detects radio cells whose radio channel quality has deteriorated (at step S102). Specifically, quality deterioration detection section 105 computes handover failure rates of each radio cell based on the number of handover attempts and the number of handover failures and detects any radio cell whose handover failure rate is equal to or higher than a predetermined threshold as a radio cell whose radio channel quality has deteriorated. In the following, the detected radio cell is designated as a cell to be optimized.

When a cell to be optimized is detected (at step S102: YES), update value calculation section 106 calculates an update value of the factor for the cell to be optimized based on the measurement information of radio channel quality and the traffic statistics information (at step S103).

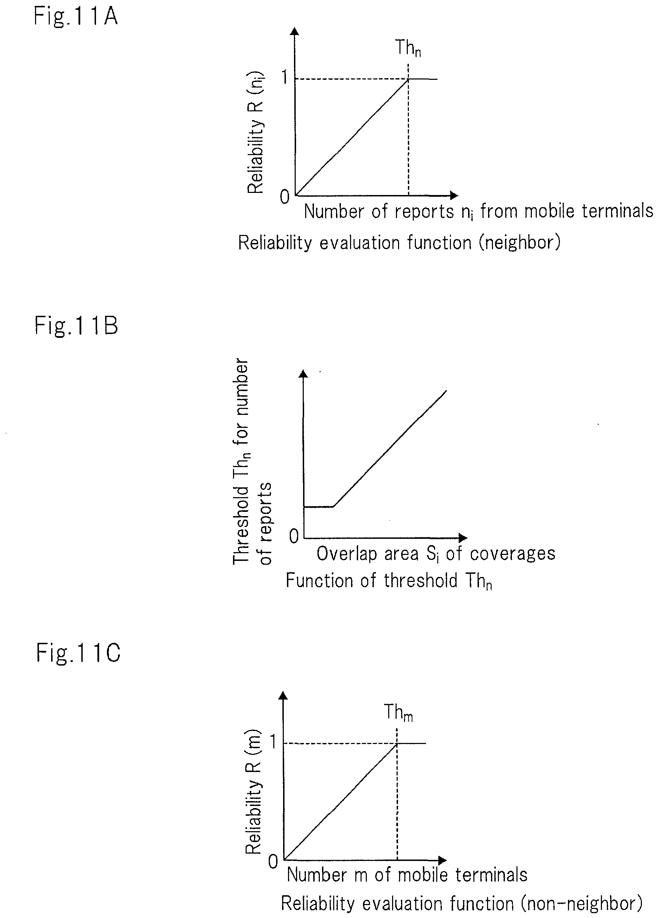

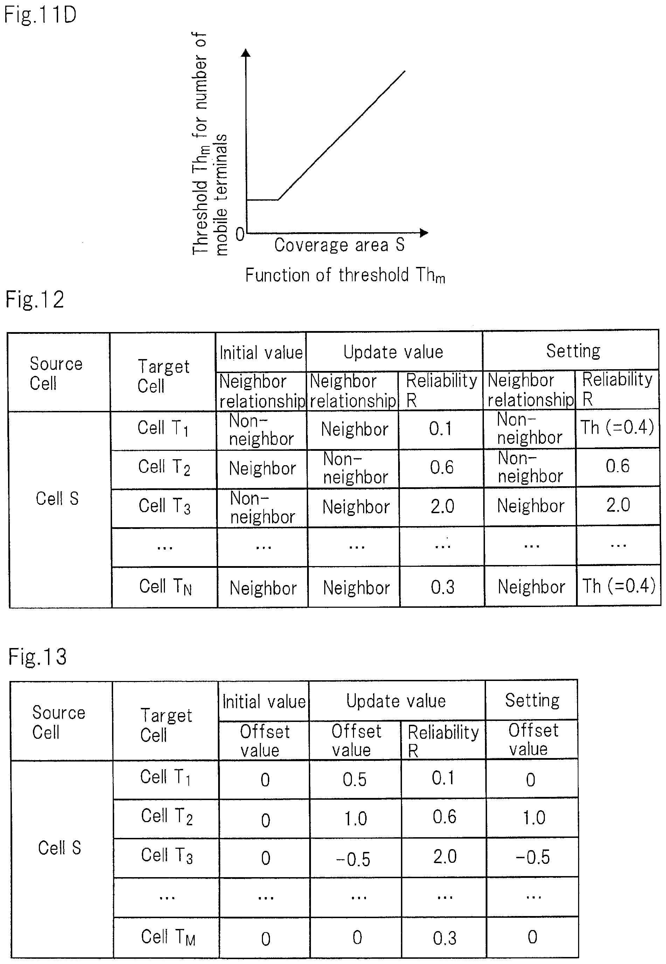

Reliability evaluation section 107 evaluates the reliability (R) of the factor's update value calculated by update value calculation section 106 (at step S104). Details of the reliability calculation method will be described later with reference to Fig. 11. When reliability R is larger than the threshold (Th), update determination section 108 makes a determination to apply the update value of the factor to radio base station 30 (at step S105).

Once update determination section 108 makes a determination that the update value of the factor is to be applied to radio base station 30, radio parameter updating section 109 determines a radio parameter based on the update value of the factor and sets the radio parameter on radio base station 30 to update the radio parameter (at step S106).

Self-optimizing system 100 detects any radio cell that has degraded radio channel quality (at step S102) even after the radio parameter is updated. If the radio channel quality of any radio cell satisfies a required level as a result of the radio parameter update, radio base station 30 that manages the radio cell is removed from a list of radio base stations 30 subject to radio parameter update. On the other hand, when the radio channel quality of the radio cell does not satisfy the required level, self-optimizing system 100 performs the process starting with calculating an update value of the factor and proceeding to updating the radio parameter again (steps S103 to S106). Self-optimizing system 100 repeats updating the radio parameter until the radio channel quality satisfies the required level or until the cumulative amount of change in the radio parameter exceeds a predetermined threshold. Self-optimizing system 100 finishes the overall process when there is no longer any radio cell that needs adjustment of the radio parameter.

Next, an operation performed by update value calculation section 106 to calculate an update value of a factor will be described.

When the factor is a neighbor relationship between radio cells, update value calculation section 106 can calculate the update value of the neighbor relationship using the second method.

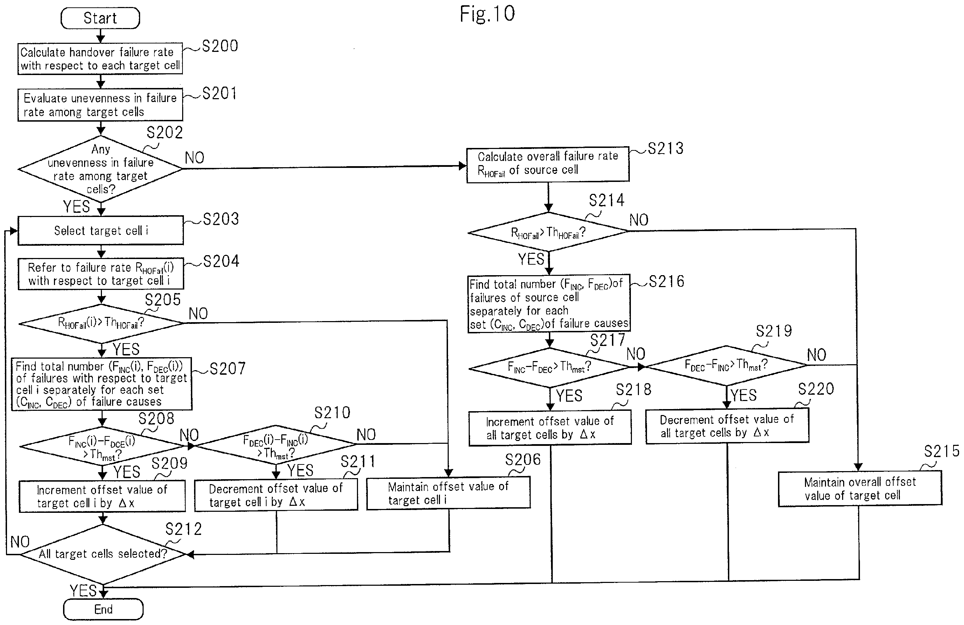

On the other hand, when the factor is an offset value, update value calculation section 106 can calculate the update value by acquiring traffic statistics information from communication statistics storage section 104. Now, a method for calculating the update value of the offset value will be described in more detail with reference to Fig. 9 and Fig. 10.

Fig. 9 is a diagram showing an example of management information managed when update value calculation section 106 calculates the update value of the offset value.

For each neighbor cell, update value calculation section 106 manages communication statistics of handovers performed from a cell to be optimized (source cell) to the neighbor cell (target cell) serving as a handover destination. Specifically, regarding handovers from a source cell to target cell i serving as a handover destination, update value calculation section 106 manages the number of handover attempts ($a_i$), the number of failures ($f_i$), and the number of failures ($c_{ij}$) classified by cause of failure $c_j$.

Fig. 10 is a flowchart illustrating an operation performed by update value calculation section 106 to calculate the update value of the offset value.

Update value calculation section 106 calculates a handover failure rate of each target cell based on the number of handover attempts ($a_i$) and failures ($f_i$) acquired from communication statistics storage section 104 (at step S200). Furthermore, update value calculation section 106 evaluates the presence or absence of unevenness in the failure rate among the target cells (at step S201).

The presence or absence of unevenness in the failure rate among the target cells can be evaluated, for example, by using the H index (Herfindahl index) given by Expression (3), which quantifies the concentration ratio of a failure rate distribution among the target cells.

[Mathematical expression 3]

$$\begin{cases} H = \sum_{i=1}^{M} h_i \\ h_i = \left( \dfrac{p_i}{\sum_{j=1}^{M} p_j} \right)^2 \end{cases} \quad (3)$$

Where i is an identifier of the target cell, M is the total number of target cells, $p_i$ is the failure rate of handovers from the source cell to target cell i serving as a handover destination. A value range of the H index is 1/M to 1. The higher the failure rate with respect to a specific target cell, the closer the value is to 1 while the more uniform the rate of failure distribution over all the target cells, the closer the value is to 1/M.

Update value calculation section 106 determines that the rate of failure distribution over the target cells is significantly uneven and that handover failures are concentrated on some target cells, for example, when the H index is equal to or larger than a predetermined threshold (Rx), and otherwise, update value calculation section 106 determines that handover failures occur with respect to unspecific target cells (at step S202). Incidentally, although in the example described in this exemplary embodiment, the Herfindahl index is used to quantify unevenness, another index, such as entropy, may be used for quantifying of unevenness.

If it is determined at step S202 that there is unevenness in the failure rate among the target cells, update value calculation section 106 selects each target cell that is in the vicinity of the source cell (at step S203) and evaluates failure rate values with respect to the target cell (at step S205) by referring to the failure rate calculated at step S200 (at step S204).

If the failure rate $R_{HOFail}(i)$ with respect to target cell i is equal to or lower than a threshold ($Th_{HOFail}$) (at step S205: NO), update value calculation section 106 uses the current offset value as an update value (at step S206). On the other hand, if the failure rate $R_{HOFail}(i)$ is higher than the threshold ($Th_{HoFail}$) (at step S205: YES), update value calculation section 106 tabulates the number of handover failures $f_i$ with respect to target cell i separately by failure causes $c_j$ (at step S207). Specifically, update value calculation section 106 classifies causes of handover failure $c_j$ into causes ($C_{INC}$) that can be remedied if the offset value is increased and causes ($C_{DEC}$) that can be remedied if the offset value is decreased. Furthermore, regarding handover attempts from the source cell to target cell i serving as a handover destination, based on the number of handover failures $c_{ij}$ classified by causes of failure $c_j$, update value calculation section 106 calculates the total number of failures $F_{INC}(i)$ caused by $C_{INC}$ as well as the total number of failures $F_{DEC}(i)$ caused by $C_{DEC}$ using Expression (4).
[Mathematical expression 4]

$$\begin{cases} F_{INC}(i) = \displaystyle\sum_{c_j \in C_{INC}} c_{ij} \\ F_{DEC}(i) = \displaystyle\sum_{c_j \in C_{DEC}} c_{ij} \end{cases} \qquad (4)$$

Update value calculation section 106 evaluates the values of $F_{INC}(i)$ and $F_{DEC}(i)$ (at steps S208 any S210). If $F_{INC}(i)$ is larger than $F_{DEC}(i)$ by a hysteresis value ($Th_{hyst}$) or more, update value calculation section 106 provides the update value obtained by adding a fixed value ($\triangle x$) to the current offset value as an offset value to be applied only to target cell i (at step SS09). On the other hand, if $F_{DEC}(i)$ is larger than $F_{INC}(i)$ by the hysteresis value ($Th_{hyst}$) or more, update value calculation section 106 provides the update value obtained by subtracting the fixed value ($\triangle x$) from the current offset value as an offset value to be applied only to target cell i (at step S211). If there isn't any difference that is comparable to the hysteresis value ($Th_{hyst}$) between $F_{DEC}(i)$ and $F_{INC}(i)$, the current offset value is used as an update value (at step S206).

Update value calculation section 106 performs the process of steps S203 to S211 in relation to all the target cells that are in the vicinity of the source cell (at step S212).

On the other hand, if it is determined at step S202 that there is no unevenness in the failure rate among the target cells, update value calculation section 106 calculates the overall failure rate of the source cell (at step S213) and evaluates the value of the failure rate (at step S214).

If the overall failure rate $R_{HOFail}$ of the source cell is equal to or lower than the threshold ($Th_{HOFail}$) (at step S214: NO), update value calculation section 106 sets the current offset value as an update value (at step S215). On the other hand, if failure rate $R_{HOFail}$ is higher than the threshold $Th_{HOFail}$ (at step S214: YES), update value calculation section 106 tabulates the number of failures $f_i$ with respect to target cell i separately by causes of failure $c_j$ (at step S216). Specifically, as in the case of step S207, update value calculation section 106 classifies causes of handover failure $c_j$ into causes ($C_{INC}$) that can be remedied if the offset value is increased and causes ($C_{DEC}$) that can be remedied if the offset value is decreased. Furthermore, update value calculation section 106 calculates the total number of failures $F_{INC}$ caused by $C_{INC}$ as well as the total number of failures $F_{DEC}$ caused by $C_{DEC}$ using Expression (5).
[Mathematical expression 5]

$$\begin{cases} F_{INC} = \displaystyle\sum_{i}\sum_{c_j \in C_{INC}} c_{ij} \\ F_{DEC} = \displaystyle\sum_{i}\sum_{c_j \in C_{DEC}} c_{ij} \end{cases} \qquad (5)$$

Update value calculation section 106 evaluates the values of $F_{INC}$ and $F_{DEC}$ (at steps S217 and S219). If $F_{INC}$ is larger than $F_{DEC}$ by the hysteresis value ($Th_{hyst}$) or more, update value calculation section 106 provides the update value obtained by adding a fixed value ($\triangle x$) to the current offset value as an offset value to be applied to all the target cells that are in the vicinity of the source cell (at step S218). On the other hand, if $F_{DEC}$ is larger than $F_{INC}$ by the hysteresis value ($Th_{hyst}$) or more, update value calculation section 106 provides the value obtained by subtracting the fixed value ($\triangle x$) from the current offset value as an offset value to be applied to all the target cells that are in the vicinity of the source cell (at step S220). If there isn't any difference that is comparable to the hysteresis value ($Th_{hyst}$) between $F_{DEC}$ and $F_{INC}$, the current offset value is used as an update value (at step S215).

Fig. 11A and Fig. 11C are diagrams showing examples of an evaluation function used by reliability evaluation section 107 to evaluate the reliability of a factor's update value. The evaluation function is a function for an update value of a neighbor relationship between radio cells and has the property of returning higher reliability as the number of reports from mobile terminals 10 connected to the radio cell per unit area or the number of mobile terminals 10 increases.

Fig. 11A is an evaluation function of reliability in the case where the update value of the neighbor relationship is "neighbor," showing a relationship between the reliability (R) of the update value and the number of reports ($n_i$) from mobile terminals 10 connected to the source cell stating that the received power of pilot signals transmitted from target cell i is equal or higher than a threshold. Fig. 11B is a function used to determine a threshold ($Th_n$) for the number of reports needed to return 1 as reliability in Fig. 11A. The function has the property of returning a higher value of the threshold ($Th_n$) as an overlap area ($s_i$) of the coverage of the source cell and coverage of target cell i increases. The overlap area of the coverage of the source cell and coverage of target cell i can be calculated using a design tool as in the case of the first method.

Fig. 11C is an evaluation function in the case where the update value of the neighbor relationship is "non-neighbor," showing a relationship between the reliability (R) of the update value and the number of mobile terminals 10 (m) connected to the source cell. Fig. 11D is a function used to determine a threshold ($Th_m$) for the number of reports needed to return 1 as reliability 1 in Fig. 11C. The function has the property of returning a higher value of the threshold ($Th_m$) as a coverage area (s) of the source cell increases. The coverage area can be calculated using a design tool as in the case of the first method.

Evaluation functions for the update value of the neighbor relationship between radio cells have been shown in Fig. 11A and Fig. 11C, and similar evaluation functions can be used for an update value of the offset value. That is, when the update value is an offset value applied to specific target cell i, the reliability of the update value can be evaluated by defining evaluation functions similar to those shown in Fig. 11A and Fig. 11B for the number of failures of handovers from the source cell to target cell i serving as a handover destination and the overlap area of ($s_i$) of the coverage of the source cell and the coverage of target cell i. Incidentally, if the update value is a value obtained by increasing the current offset value, the reliability of $F_{INC}(i)$ can be evaluated as the number of handover failures, and if the update value is a value obtained by decreasing the current offset value, the reliability of $F_{DEC}(i)$ can be evaluated.

When the update value is an offset value to be applied to all the target cells that are in the vicinity of the source cell, the reliability of the update value can be evaluated by defining evaluation functions similar to those shown in Fig. 11A and Fig. 11B for the sum total of handover failures with respect to individual target cells serving as handover destinations and the sum total (S') of the overlap areas of the coverage of the source cell and the coverage of individual target cells. Incidentally, if the update value is a value obtained by increasing the current offset value, the reliability of $F_{INC}$ can be evaluated as the number of handover failures, and if the update value is a value obtained by decreasing the current offset value, the reliability of $F_{DEC}$ can be evaluated.

Fig. 12 is a diagram showing an example of management information managed by update determination section 108 when the factor is a neighbor relationship between radio cells.

Referring to Fig. 12, the initial value of the neighbor relationship, the update value and the reliability of the update value, and the neighbor relationship setting applied to radio base station 30 and the reliability of the neighbor relationship setting are managed as management information for each neighbor cell (target cell). As the neighbor relationship setting, the update value is adopted when the reliability of the update value is larger than the threshold (Th). Otherwise, the initial value is adopted. Incidentally, in Fig. 12, the threshold (Th) for reliability is 0.4. When the initial value is adopted, the reliability of the setting is set equal to the threshold (Th).

First, radio parameter updating section 109 extracts target cells whose neighbor relationship setting is "neighbor" from the management information managed by update determination section 108, in descending order of reliability until the upper limit number of cells that can be registered to the neighbor cell list is reached. Then, radio parameter updating section 109 registers the extracted target cells to the neighbor cell list and sets the resulting neighbor cell list on radio base station 30.

Fig. 13 is a diagram showing an example of management information managed by update determination section 108 when the factor is an offset value applied to a specific target cell.

Referring to Fig. 13, the initial value of the offset value, the update value and the reliability of the update value, and the offset value setting to radio base station 30 are managed as management information for each neighbor cell (target cell). As the offset value setting, the update value is adopted when the reliability of the update value is larger than the threshold (Th). Otherwise, the initial value is adopted. When the initial value is adopted, the reliability of the setting is set equal to the threshold.

Radio parameter updating section 109 sets the offset value setting of each target cell managed by update determination section 108 on radio base station 30.

In this way, according to this exemplary embodiment, self-optimizing system 100 calculates update values of the determining factors of radio parameters to be set on radio base station 30 that manages a cell to be optimized and evaluates the reliability of the update values based on the number of mobile terminals 10 connected to the cell to be optimized, the number of reports of radio channel quality from mobile terminals 10, overlap areas of the coverage of the cell to be optimized and the coverage of neighbor cells, and the coverage area of the cell to be optimized. Then, self-optimizing system 100 determines a radio parameter based on whether the evaluated reliability of the factor's update value exceeds a predetermined threshold and sets the radio parameter on radio base station 30.

Consequently, even if there is unevenness in the geographical or temporal distribution of mobile terminals 10 connected to the cell to be optimized since it can be determined whether or not to apply the update value to radio base station 30 according to the reliability of the factor's update value calculated based on actual measurement information about mobile terminals 10, it is possible to reduce the likelihood that the communication quality may not be improved even if the radio parameter is updated.

Also, there is no need to wait until the number of mobile terminals 10 connected to the cell to be optimized or the number of reports from mobile terminals 10 exceeds a predetermined number and deficiencies of the initial value of the radio parameter can be remedied quickly, thereby preventing prolonged deterioration of communication quality.

Incidentally, according to this exemplary embodiment, an example in which the radio communication system is provided with self-optimizing system 100 as well as radio base stations 30 and in which the self-optimizing system 100 sets radio parameters on radio base stations 30 is provided was presented. However, the present invention is not limited such an example. Alternatively, radio base station 30 may set radio parameters with which radio base station itself is provided.

The traffic statistics information used to calculate the update value of the factor is collected by radio base station 30 and radio channel quality information is reported from mobile terminals 10 to radio base station 30. Thus, radio base station 30 can calculate the update value of the factor based on such information. Also, if evaluation functions and the like used to evaluate calculated update values of factors are stored in radio base station 30, radio base station 30 can evaluate the reliability of update values of the factors and determine whether or not to apply the update values of the factors to radio base station 30.

(Second exemplary embodiment)

Self-optimizing system 200 according to a second exemplary embodiment evaluates the reliability of a factor's initial value, as well, and applies the factor's initial value or update value, whichever has the higher reliability, to radio base station 30. The same components and operation steps as those in the first exemplary embodiment are denoted by the same reference numerals/step numbers as the corresponding components/operation steps in the first exemplary embodiment, and description thereof will be omitted and mainly differences will be described below.

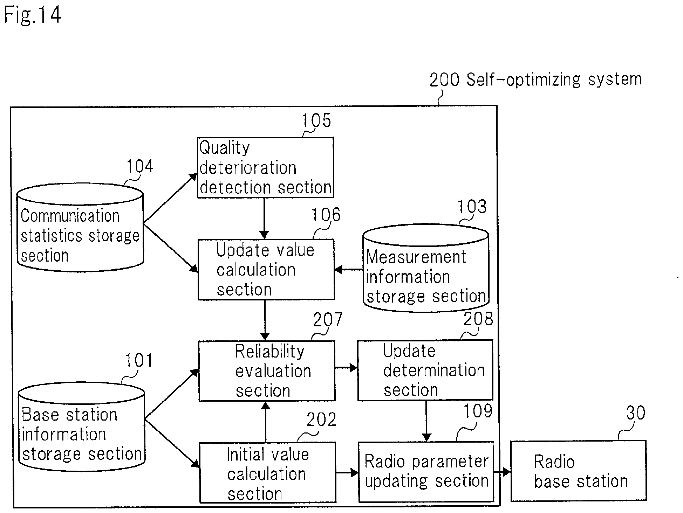

Fig. 14 is a diagram showing a configuration of self-optimizing system 200 according to the second exemplary embodiment.

Self-optimizing system 200 according to this exemplary embodiment is different from self-optimizing system 100 according to the first exemplary embodiment in that initial value calculation section 102 is substituted with initial value calculation section 202, in that reliability evaluation section 107 is substituted with reliability evaluation section 207, and in that update determination section is substituted with update determination section 208.

Initial value calculation section 202 calculates an initial value of each factor based on radio base station information acquired from base station information storage section 101 and outputs the calculated initial value of the factor to reliability evaluation section 207.

In addition to evaluations similar to those according to the first exemplary embodiment, reliability evaluation section 207 performs a reliability evaluation of the factor's initial value calculated by initial value calculation section 202 as well. Reliability evaluation section 207 acquires radio base station information used for initial value calculations from base station information storage section 101 and calculates the reliability of the initial value using an evaluation function specific to each radio cell and using the acquired information as an input.

Update determination section 208 compares reliability between the factor's initial value and update value, the reliability having been evaluated by reliability evaluation section 207, and determines whether to apply the factor's update value calculated by update value calculation section 106 to radio base station 30.

Next, operation of self-optimizing system 200 will be described.

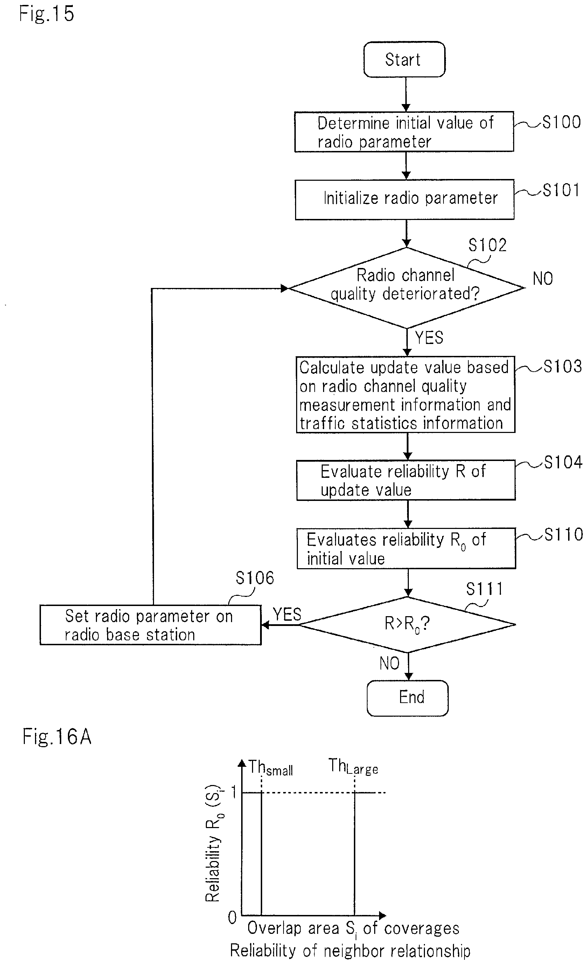

Fig. 15 is a flowchart illustrating the operation of self-optimizing system 200.

Steps S100 to S103 are the same as the first exemplary embodiment described above, and thus description thereof will be omitted.

Reliability evaluation section 207 evaluates the reliability (R) of the update value calculated by update value calculation section 106 (at step S104). Furthermore, reliability evaluation section 207 also evaluates reliability ($R_0$) of the initial value calculated by initial value calculation section 202 (at step S110).

Update determination section 208 compares reliability R of the update value with reliability $R_0$ of the initial value (at step S111). When reliability R of the update value is higher than reliability $R_0$ of the initial value, update determination section 208 determines to apply the update value to radio base station 30. When reliability $R_0$ of the initial value is equal to or higher than reliability R of the update value, update determination section 208 determines to apply the initial value to radio base station 30. Incidentally, priority may be given to the initial value or the update value by adding a weighting factor w to a decision criterion as shown by Expression (6):
[Mathematical expression 6]

$$w \cdot R > R_0 \qquad (6)$$

After update determination section 108 makes a selection, based on the initial value or update value, as to which radio parameter is to be applied to radio base station 30, radio parameter updating section 109 sets the selected radio parameter on radio base station 30, and thereby updates the radio parameter (at step S106).

Self-optimizing system 200 detects any radio cell with degraded radio channel quality (at step S102) even after the radio parameter is updated. If the radio channel quality of any radio cell satisfies a required level as a result of the radio parameter update, radio base station 30 that manages the radio cell is removed from a list of radio base stations 30 subject to radio parameter update. On the other hand, when the radio channel quality of the radio cell does not satisfy the required level, self-optimizing system 100 performs the process of calculating an update value of the factor and updating the radio parameter again (steps S103 to S106 and steps S110 to S111). Self-optimizing system 200 repeats updating the radio parameter until the radio channel quality satisfies the required level or a cumulative amount of change in the radio parameter exceeds a predetermined threshold. Self-optimizing system 100 finishes the overall process when there is no longer any radio cell that needs adjustment of the radio parameter.

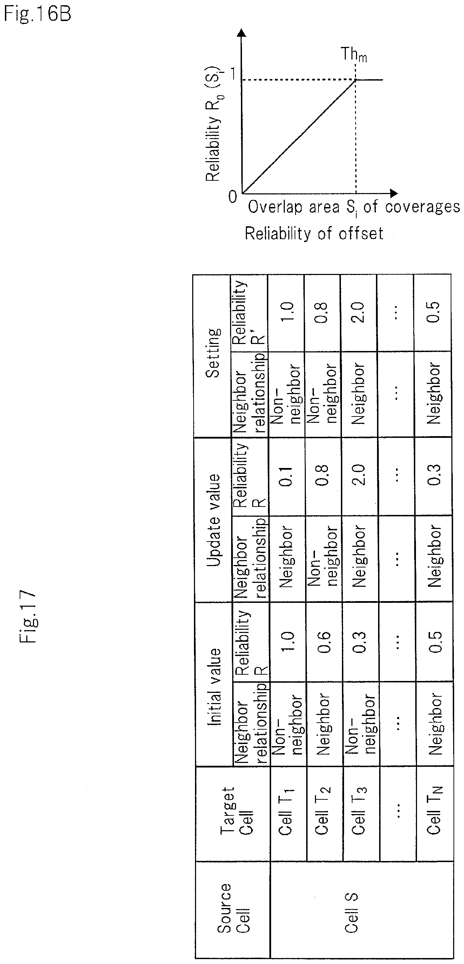

Fig. 16A and Fig. 16B are diagrams showing examples of an evaluation function used by reliability evaluation section 207 to evaluate reliability of an initial value.

Fig. 16A is an evaluation function for an initial value of a neighbor relationship, showing the relationship of the reliability ($R_0$) of the initial value to overlap area ($s_i$) of the coverage of the source cell and thus coverage of target cell i. The initial value of the neighbor relationship calculated by the first method has the property of having high accuracy when the overlap area ($s_i$) is significantly large or small and reduced accuracy when the overlap area ($s_i$) is not significantly large or small due to coverage estimation errors. To allow for this property, the reliability evaluation function has the property of returning low reliability when the overlap area ($s_i$) is between a threshold ($Th_{Small}$) and threshold ($Th_{Large}$) and otherwise returning high reliability.

Fig. 16B is an evaluation function for an initial value of an offset value, showing a relationship of reliability ($R_0$) of the initial value to overlap area ($s_i$) of the coverage of the source cell and the coverage of target cell i. A handover position needs to be in an overlap part of the coverage of the source cell and the coverage of target cell i. Therefore, the larger the overlap area ($s_i$), the larger the design margin, increasing the likelihood that the handover position that depends on the offset value set to a fixed value will fall within the overlap part of the coverage of the source cell and the coverage of target cell i. To allow for this property, the reliability evaluation function has the property of returning high reliability as the overlap area ($s_i$) increases.

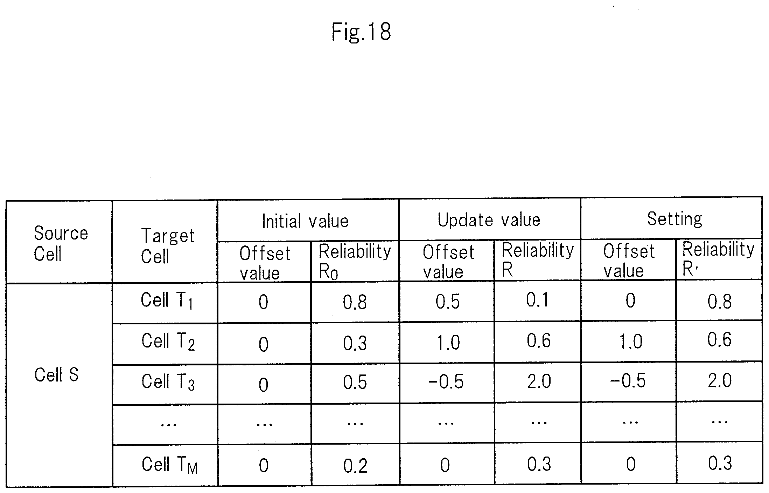

Fig. 17 is a diagram showing an example of management information managed by update determination section 208 when the factor is a neighbor relationship between radio cells. Fig. 18 is a diagram showing an example of management information managed by update determination section 208 when the factor is an offset value.

Referring to Fig. 17 and Fig. 18, the management information according to this exemplary embodiment is different from the management information shown in Fig. 12 and Fig. 13 in that the reliability of the initial value is included in the management information. Regarding the setting applied to radio base station 30, the initial value or update value of the factor, whichever has the higher reliability, is adopted. Regarding the reliability of the setting, the higher of the reliabilities of the initial value and update value is used as shown Fig. 17 and Fig. 18.

Regarding the reliability of the setting, the sum or difference of the reliabilities of the initial value and the update value may be used alternatively, where either initial value or the update value is applied, and the other is not applied, to radio base station 30. For example, the reliability (R') of the setting can be calculated from the reliability of the initial value ($R_0$), the reliability (R) of the update value, and a weighting factor (w) using Expression (7):

[Mathematical expression 7]

$$R' = |R_0 + w \cdot R| \qquad (7)$$

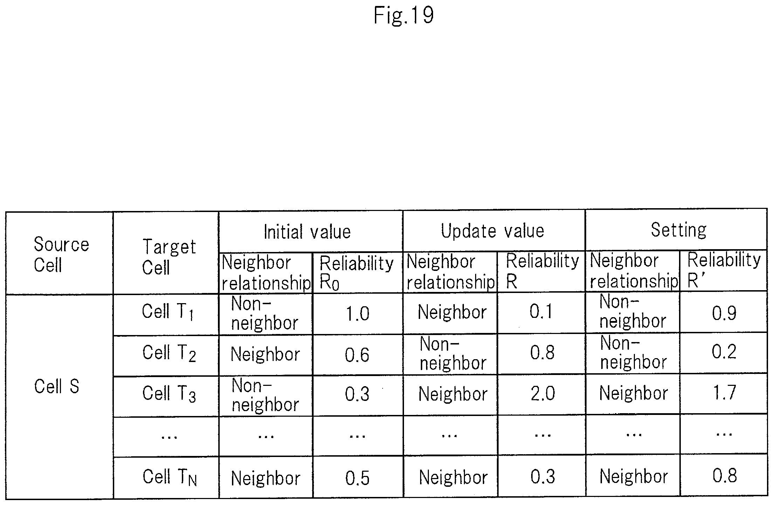

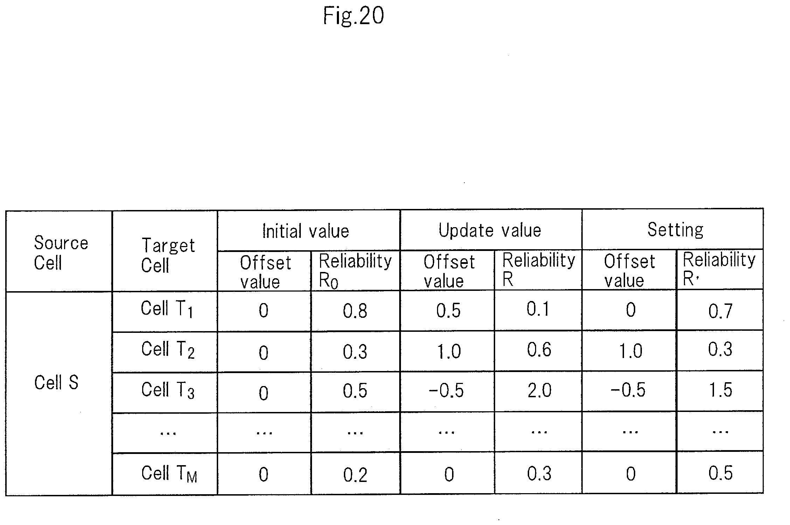

In so doing, the sum (0<w) of the reliabilities is used when the initial value and the update value are equal to each other, and the difference (w<0) of the reliabilities is used when the initial value and the update value are different from each other. Regarding the reliability of the update value, the difference of the reliabilities is used similarly by calculating the difference between the reliability of the value adopted as the update value and the reliability of the value not adopted as the update value. Examples of management information managed by update determination section 108 when the sum or difference of the reliabilities is used are shown in Fig. 19 and Fig. 20.

Fig 19 is a diagram showing an example of management information managed by update determination section 208 when the factor is a neighbor relationship between radio cells. Fig. 20 is a diagram showing an example of management information managed by update determination section 208 when the factor is an offset value.

In this way, according to the this exemplary embodiment, self-optimizing system 200 also evaluates the reliability of the factor's initial value and applies the factor's initial value or update value, whichever has the higher reliability, to radio base station 30.

According to the first exemplary embodiment, the initial value is not updated until the reliability of the update value exceeds the threshold. In contrast, according to the this exemplary embodiment, since the initial value of the factor is updated immediately if the reliability of the initial value of the factor is lower than the update value, deficiencies of the initial value can be remedied more quickly.

(Third exemplary embodiment)

Self-optimizing system 300 according to a third exemplary embodiment applies a weighted average value of the factor's initial value and update value to radio base station 30 by calculating the weighted average value according to the respective reliabilities of the initial value and update value. The same components and operation steps as those in the second exemplary embodiment are denoted by the same reference numerals/step numbers as the corresponding components/operation steps in the second exemplary embodiment, and description thereof will be omitted and mainly differences will be described below.

Self-optimizing system 300 according to this exemplary embodiment is different from self-optimizing system 200 according to the second exemplary embodiment only in that update determination section 208 is replaced by update determination section 308.

Update determination section 308 applies a weighted average value of a factor's initial value and update value to radio base station 30 by calculating the weighted average value according to the respective reliabilities of the initial value and update value.

Next, operation of update determination section 308 will be described.

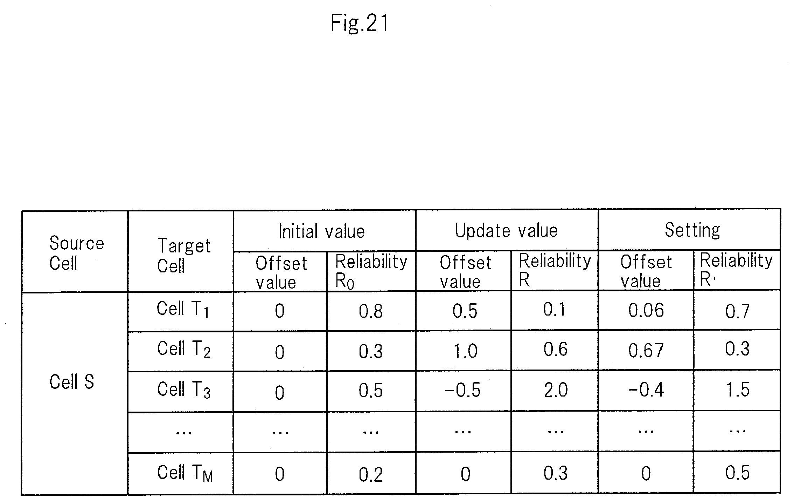

Fig. 21 is a diagram showing an example of management information managed by update determination section 308 when the factor is an offset value.

Referring to Fig. 21, instead of selecting a setting to be applied to radio base station 30 from the initial value and update value of the offset value, update determination section 308 obtains the setting to be applied to radio base station 30 by calculating a weighted average value of the initial value and update value according to the respective reliabilities of the initial value and update value using Expression (8):

[Mathematical expression 8]

$$O' = \frac{R \cdot O + R_0 \cdot O_0}{R + R_0} \qquad (8)$$

where $O_0$ and $O$ are the initial value and update value of the offset value, respectively; $O'$ is the setting to be applied to radio base station 30; and $R_0$ and $R$ are reliabil-

ities of the initial value and update value of the offset value, respectively.

In this way, according to the third exemplary embodiment, the self-optimizing system applies a weighted average value of the factor's initial value and update value to radio base station 30 by calculating the weighted average value according to the respective reliabilities of the initial value and update value.

According to the second exemplary embodiment, since one of the factor's initial value and update value is applied to radio base station 30, if there is a large difference between initial value and update value, conditions of the radio communication system can vary greatly before and after an update of the radio parameter, resulting in instability. In contrast, according to this exemplary embodiment, in which the radio parameter using a weighted average of the factor's initial value and update value gradually changes, the stability of the radio communication system when the radio parameter is updated is increased.

While the invention has been particularly shown and described with reference to exemplary embodiments thereof, the invention is not limited to these exemplary embodiments. It will be understood by those of ordinary skill in the art that various changes in form and details may be made therein without departing from the scope of the present invention as defined by the claims.

The present application is based upon and claims the benefit of priority from Japanese patent application No. 2009-258055, filed on November 11, 2009.

**Claims**

1. A radio communication system comprising:

   a radio base station (30) that is configured to manage a cell (35), mobile terminals (10) that are configured to connect to the cell (35) and measure radio channel quality of the cell (35) and radio channel quality of specific neighbor cells of neighbor cells that are in the vicinity of the cell (35), and a self-optimizing system (90) that is configured to set a radio parameter on said radio base station (30), wherein said self-optimizing system (90) comprises:

   an update value calculation section (106) configured to calculate an update value of a determining factor of the radio parameter based on communication traffic statistics information of the cell (35) and the neighbor cells and on radio channel quality information that indicates radio channel quality measured by said mobile terminals (10); a reliability evaluation section (107) configured to evaluate the reliability of the update value of the factor calculated by said update value calculation section (106);

an update determination section (108) configured to determine whether or not to apply the update value of the factor to said radio base station (30), based on the evaluation result by said reliability evaluation section (107); and

a radio parameter updating section (109) configured to set the radio parameter determined by the update value of the factor in said radio base station (30) when a determination is made that the update value of the factor is to be applied to said radio base station (30);

wherein said reliability evaluation section (107) is configured to calculate the reliability of the update value of the factor as an output of an evaluation function that inputs the number of mobile terminals (10) connected to the cell (35) or the number of reports of the radio channel quality information received from the mobile terminals (10); and

wherein the update determination section (108) is configured to determine to apply the update value of the factor to said radio base station (30) when the evaluation result by said reliability evaluation section (107) is larger than a predetermined threshold.

2.  The radio communication system according to claim 1, wherein

the radio channel quality information includes at least one from among a received power of pilot signals transmitted from the cell (35) and the neighbor cells and a signal-to-interference ratio of pilot signals transmitted from the cell (35) and the neighbor cells.

3.  The radio communication system according to claim 2, wherein

the number of mobile terminals (10) connected to the cell (35), said number being inputted to the evaluation function, is defined by a coverage area that represents a geographical scope of the cell (35) while the number of reports of the radio channel quality information, said reports being sent from said mobile terminals (10) and said number being inputted to the evaluation function, are defined by an overlap area of the coverage of the cell (35) and the coverage of the neighbor cells.

4.  The radio communication system according to any one of claims 1 to 3, wherein

said self-optimizing system (90) further comprises an initial value calculation section (102) configured to calculate an initial value of the factor.

5.  The radio communication system according to claim 4, wherein

said initial value calculation section (102) is configured to calculate the initial value of the factor based on radio base station (30) information including at least an installation position of said radio base station (30).

6.  The radio communication system according to claim 4 or 5, wherein

said reliability evaluation section (102) is configured to calculate the reliability of the initial value of the factor as an output of an evaluation function that inputs the overlap area of the coverage of the cell (35) and the coverage of the neighbor cells.

7.  The radio communication system according to claim 6, wherein

said update determination section (108) is configured to determine whether or not to apply the update value to said radio base station (30) based on a magnitude relationship between the reliability of the initial value of the factor and the reliability of the update value of the factor.

8.  The radio communication system according to claim 7, wherein

when it is determined, by said update determination section (108), not to apply the update value of the factor to said radio base station (30), said radio parameter updating section (109) is configured to determine the radio parameter based on the initial value of the factor.

9.  The radio communication system according to claim 8, wherein

said radio parameter updating section (109) is configured to perform a predetermined computation on the reliability of the initial value of the factor and the reliability of the update value of the factor and designate a calculated value as reliability of the value to be applied to said radio base station (30), where either the initial value or the update value is applied, and the other is not applied, to said radio base station (30).

10. The radio communication system according to any one of claims 1 to 9, wherein:

as each of said mobile terminals (10) moves, said mobile terminal (10) is configured to perform a handover to change a connected radio cell (35); and

the communication traffic statistics information includes at least one from among the number of handover attempts, the number of handover failures, and the number of handover failures classified by failure causes, where the handover attempts are made by said mobile terminals (10) connected to the cell (35) to perform handovers to the neighbor cells serving as handover destinations.

11. The radio communication system according to claim 10, wherein
the radio parameter is a neighbor cell list that indicates the specific neighbor cell.

12. The radio communication system according to claim 11, further comprising a surrounding base station that is configured to manage a surrounding cell located around the cell (35), wherein the factor is a neighbor relationship between the cell (35) and the surrounding cell.

13. The radio communication system according to claim 12, wherein
said radio parameter updating section (109) is configured to extract the neighbor cells based on update values of the neighbor relationship and registers a predetermined number of neighbor cells with the neighbor cell list in descending order of reliability of the update values of the neighbor relationship between the extracted neighbor cells and the cell (35).

14. The radio communication system according to claim 12, wherein
said radio parameter updating section (109) is configured to extract the neighbor cells based on initial values and update values of the neighbor relationship and registers a predetermined number of neighbor cells with the neighbor cell list in descending order of reliability of the initial values or update values of the neighbor relationship between the extracted neighbor cells and the cell (35).

15. The radio communication system according to claim 10, wherein
the radio parameter is a threshold for differences between a value that represents the radio channel quality of the cell (35) and values that represent the radio channel quality of the neighbor cells; and
when the difference between the value that represents the radio channel quality of the cell (35) and the value that represents the radio channel quality of any of the neighbor cells exceeds the threshold, said radio base station (30) is configured to make said mobile terminals (10) report the radio channel quality of the cell (35) and the radio channel quality of the neighbor cell.

16. The radio communication system according to claim 15, wherein
the factors are a first offset value that represents the radio channel quality of the cell (35) and a second offset value that represents the radio channel quality of the specific neighbor cell.

17. The radio communication system according to claim 16, wherein
said update value calculation section (106) is configured to classify the handover failure causes into first failure causes that can be remedied by updating the first offset value and second failure causes that can be remedied by updating the second offset value, tabulate the total number of handover failures separately for the first and second failure causes, and calculate an update value of either the first or second offset values based on a magnitude relationship between the total number of handover failures due to the first and second failure causes.

18. The radio communication system according to claim 16, wherein
said update value calculation section (106) is configured to calculate a handover failure rate for each of the neighbor cells based on the number of handover attempts and the number of handover failures, evaluate unevenness in the calculated handover failure rate among the neighbor cells, and determine based on a result of the evaluation whether to calculate the second offset value for all of the neighbor cells in common or calculate the second offset value separately for each of the neighbor cells.

19. The radio communication system according to claim 18, wherein
said update value calculation section (106) is configured to quantify the degree of unevenness in the failure rate among the neighbor cells using a Herfindahl index or entropy and evaluate the unevenness in the handover failure rate among the neighbor cells based on the quantified degree of unevenness in the failure rate among the neighbor cells.

20. A radio communication system comprising:

a radio base station (30) that is configured to manage a cell (35), mobile terminals (10) that are configured to connect to the cell (35) and measure radio channel quality of the cell (35) and radio channel quality of specific neighbor cells of neighbor cells that are in the vicinity of the cell (35), and a self-optimizing system (90) that is configured to set a radio parameter on said radio base station (30), wherein
said self-optimizing system (90) comprises:

an initial value calculation section (102) configured to calculate an initial value of a determining factor of the radio parameter;
an update value calculation section (106) configured to calculate an update value of the factor based on communication traffic statistics information of the cell (35) and the neighbor cells and on radio channel quality information that indicates radio channel quality measured by said mobile terminals (10);

a reliability evaluation section (107) configured to evaluate reliability of the initial value of the factor calculated by said initial value calculation section and reliability of the update value of the factor calculated by said update value calculation section;

an update determination section (108) configured to determine applying a weighted average value of the initial value and update value of the factor calculated using the reliability of the initial value and update value of the factor evaluated by said reliability evaluation section to said radio base station (30); and

a radio parameter updating section (109) configured to set the radio parameter determined by the weighted average value on said radio base station (30) when a determination is made that the weighted average value is to be applied to said radio base station (30);

wherein said reliability evaluation section (107) is configured to calculate the reliability of the update value of the factor as an output of an evaluation function that inputs the number of mobile terminals (10) connected to the cell (35) or the number of reports of the radio channel quality information received from the mobile terminals (10).

21. A self-optimizing system (90) for setting a radio parameter on a radio base station (30) that manages a cell (35), comprising:

an update value calculation section (106) configured to calculate an update value of a determining factor of the radio parameter based on traffic statistics information of the cell (35) and neighbor cells that are in the vicinity of the cell (35) and on radio channel quality information that indicates radio channel quality of the cell (35) and radio channel quality of specific neighbor cell of the neighbor cells, where the radio channel quality is measured by mobile terminals (10) connected to the cell (35);

a reliability evaluation section (107) configured to evaluate reliability of the update value of the factor calculated by said update value calculation section (106);

an update determination section (108) configured to determine whether or not to apply the update value of the factor to said radio base station (30), based on an evaluation result by said reliability evaluation section (107); and

a radio parameter updating section (109) configured to set the radio parameter determined by the update value of the factor in said radio base station (30) when a determination is made that the update value of the factor is to be applied to said radio base station (30);

wherein said reliability evaluation section (107) is configured to calculate the reliability of the update value of the factor as an output of an evaluation function that inputs the number of mobile terminals (10) connected to the cell (35) or the number of reports of the radio channel quality information received from the mobile terminals (10); and

wherein the update determination section (108) is configured to determine to apply the update value of the factor to said radio base station (30) when the evaluation result by said reliability evaluation section (107) is larger than a predetermined threshold.

22. A radio base station (30) for managing a cell (35) and setting a radio parameter of the radio base station (30), comprising:

an update value calculation section (106) configured to calculate an update value of a determining factor of the radio parameter based on traffic statistics information of the cell (35) and neighbor cells that are in the vicinity of the cell (35) and on radio channel quality information that indicates radio channel quality of the cell (35) and radio channel quality of specific neighbor cell of the neighbor cells, where the radio channel quality is measured by mobile terminals (10) connected to the cell (35);

a reliability evaluation section (107) configured to evaluate reliability of the update value of the factor calculated by said update value calculation section (106);

an update determination section (108) configured to determine whether or not to apply the update value of the factor to the radio base station (30), based on an evaluation result by said reliability evaluation section (107); and

a radio parameter updating section (109) configured to set the radio parameter determined by the update value of the factor in the radio base station (30) when a determination is made that the update value of the factor is to be applied to said radio base station (30);

wherein said reliability evaluation section (107) is configured to calculate the reliability of the update value of the factor as an output of an evaluation function that inputs the number of mobile terminals (10) connected to the cell (35) or the number of reports of the radio channel quality information received from the mobile terminals (10); and

wherein the update determination section (108) is configured to determine to apply the update value of the factor to said radio base station (30) when the evaluation result by said reliability evaluation section (107) is larger than a predetermined threshold.

23. A radio parameter setting method that is applied to a self-optimizing system (90) for setting a radio parameter on a radio base station (30) that manages a cell (35), the radio parameter setting method comprising:

calculating (S 103) an update value of a determining factor of the radio parameter based on traffic statistics information of the cell (35) and neighbor cells that are in the vicinity of the the cell (35) and on radio channel quality information that indicates radio channel quality of the cell (35) and radio channel quality of specific neighbor cell of the neighbor cells, where the radio channel quality is measured by mobile terminals (10) connected to the cell (35);

evaluating (S104) reliability of the calculated update value of the determining factor;

determining (S105) whether or not to apply the update value of the factor to said radio base station (30), based on an evaluation result; and

setting (S106) the radio parameter determined by the update value of the factor on said radio base station (30) when a determination is made that the update value of the factor is to be applied to said radio base station (30);

wherein said evaluating reliability comprises calculating (S103) the reliability of the update value of the factor as an output of an evaluation function that inputs the number of mobile terminals (10) connected to the cell (35) or the number of reports of the radio channel quality information received from the mobile terminals (10); and

wherein the determining (S 105) whether or not to apply the update value comprises determining to apply the update value of the factor to said radio base station (30) when the evaluation result by said evaluating reliability is larger than a predetermined threshold.

**Patentansprüche**

1. Funkkommunikationssystem, welches Folgendes aufweist:

eine Funkbasisstation (30), die dafür ausgelegt ist, eine Zelle (35) zu verwalten, mobile Endgeräte (10), die dafür ausgelegt sind, sich mit der Zelle (35) zu verbinden und die Funkkanalqualität der Zelle (35) und die Funkkanalqualität spezifischer Nachbarzellen, die in der Nähe der Zelle (35) liegen, zu messen, und ein selbstoptimierendes System (90), das dafür ausgelegt ist, einen Funkparameter an der Funkbasisstation (30) einzustellen, wobei das selbstoptimierende System (90) Folgendes aufweist:

einen Aktualisierungswert-Berechnungsabschnitt (106), der dafür ausgelegt ist, einen Aktualisierungswert eines Bestimmungsfaktors des Funkparameters auf der Grundlage von Kommunikationsverkehrsstatistikinformationen der Zelle (35) und der Nachbarzellen und von Funkkanalqualitätsinformationen, welche die durch die mobilen Endgeräte (10) gemessene Funkkanalqualität angeben, zu berechnen,

einen Zuverlässigkeitsbewertungsabschnitt (107), der dafür ausgelegt ist, die Zuverlässigkeit des durch den Aktualisierungswert-Berechnungsabschnitt (106) berechneten Aktualisierungswerts des Faktors zu bewerten,

einen Aktualisierungsbestimmungsabschnitt (108), der dafür ausgelegt ist, auf der Grundlage des Bewertungsergebnisses des Zuverlässigkeitsbewertungsabschnitts (107) festzustellen, ob der Aktualisierungswert des Faktors auf die Funkbasisstation (30) anzuwenden ist, und

einen Funkparameter-Aktualisierungsabschnitt (109), der dafür ausgelegt ist, den durch den Aktualisierungswert des Faktors bestimmten Funkparameter in der Funkbasisstation (30) einzustellen, wenn festgestellt wird, dass der Aktualisierungswert des Faktors auf die Funkbasisstation (30) anzuwenden ist,

wobei der Zuverlässigkeitsbewertungsabschnitt (107) dafür ausgelegt ist, die Zuverlässigkeit des Aktualisierungswerts des Faktors als eine Ausgabe einer Bewertungsfunktion zu berechnen, welche als Eingaben die Anzahl der mobilen Endgeräte (10), die mit der Zelle (35) verbunden sind, oder die Anzahl der Mitteilungen der Funkkanalqualitätsinformationen, die von den mobilen Endgeräten (10) empfangen werden, entgegennimmt, und wobei der Aktualisierungsbestimmungsabschnitt (108) dafür ausgelegt ist, festzustellen, dass der Aktualisierungswert des Faktors auf die Funkbasisstation (30) anzuwenden ist, wenn das Bewertungsergebnis des Zuverlässigkeitsbewertungsabschnitts (107) größer als ein vorgegebener Schwellenwert ist.

**2.** Funkkommunikationssystem nach Anspruch 1, wobei

die Funkkanalqualitätsinformationen wenigstens eine von der empfangenen Leistung von der Zelle (35) und den Nachbarzellen gesendeter Pilotsignale und dem Signal-Interferenz-Verhältnis von der Zelle (35) und den Nachbarzellen gesendeter Pilotsignale aufweisen.

**3.** Funkkommunikationssystem nach Anspruch 2, wobei

die Anzahl der mobilen Endgeräte (10), die mit der Zelle (35) verbunden sind, wobei die Anzahl in die Bewertungsfunktion eingegeben wird, durch einen Abdeckungsbereich, der den geographischen Erstreckungsbereich der Zelle (35) repräsentiert, definiert ist, während die Anzahl der Mitteilungen über die Funkkanalqualitätsinformationen, wobei die Mitteilungen von den mobilen Endgeräten (10) gesendet werden und die Anzahl in die Bewertungsfunktion eingegeben wird, durch einen Überlappungsbereich der Abdeckung der Zelle (35) und der Abdeckung der Nachbarzellen definiert ist.

**4.** Funkkommunikationssystem nach einem der Ansprüche 1 bis 3, wobei

das selbstoptimierende System (90) ferner Folgendes aufweist:

einen Anfangswert-Berechnungsabschnitt (102), der dafür ausgelegt ist, einen Anfangswert des Faktors zu berechnen.

**5.** Funkkommunikationssystem nach Anspruch 4, wobei

der Anfangswert-Berechnungsabschnitt (102) dafür ausgelegt ist, den Anfangswert des Faktors auf der Grundlage von Informationen der Funkbasisstation (30) zu berechnen, welche zumindest die Installationsposition der Funkbasisstation (30) aufweisen.

**6.** Funkkommunikationssystem nach Anspruch 4 oder 5, wobei

der Zuverlässigkeitsbewertungsabschnitt (102) dafür ausgelegt ist, die Zuverlässigkeit des Anfangswerts des Faktors als eine Ausgabe einer Bewertungsfunktion zu berechnen, welche als Eingaben den Überlappungsbereich der Abdeckung der Zelle (35) und der Abdeckung der Nachbarzellen entgegennimmt.

**7.** Funkkommunikationssystem nach Anspruch 6, wobei

der Aktualisierungsbestimmungsabschnitt (108) dafür ausgelegt ist, auf der Grundlage der Betragsbeziehung zwischen der Zuverlässigkeit des Anfangswerts des Faktors und der Zuverlässigkeit des Aktualisierungswerts des Faktors festzustellen, ob der Aktualisierungswert auf die Funkbasisstation (30) anzuwenden ist.

**8.** Funkkommunikationssystem nach Anspruch 7, wobei

wenn durch den Aktualisierungsbestimmungsabschnitt (108) festgestellt wird, dass der Aktualisierungswert des Faktors nicht auf die Funkbasisstation (30) anzuwenden ist, der Funkparameter-Aktualisierungsabschnitt (109) den Funkparameter auf der Grundlage des Anfangswerts des Faktors bestimmen kann.

**9.** Funkkommunikationssystem nach Anspruch 8, wobei

der Funkparameter-Aktualisierungsabschnitt (109) dafür ausgelegt ist, eine vorgegebene Berechnung zur Zuverlässigkeit des Anfangswerts des Faktors und zur Zuverlässigkeit des Aktualisierungswerts des Faktors auszuführen und einen berechneten Wert als Zuverlässigkeit des auf die Funkbasisstation (30) anzuwendenden Werts festzulegen, wobei entweder der Anfangswert oder der Aktualisierungswert auf die Funkbasisstation (30) angewendet wird und der andere nicht darauf angewendet wird.

**10.** Funkkommunikationssystem nach einem der Ansprüche 1 bis 9, wobei:

wenn sich jedes der mobilen Endgeräte (10) bewegt, das mobile Endgerät (10) dafür ausgelegt ist, eine Übergabe zur Änderung einer verbundenen Funkzelle (35) auszuführen, und die Kommunikationsverkehrsstatistikinformationen wenigstens eine von der Anzahl der Übergabeversuche, der Anzahl der Übergabefehler und der Anzahl der Übergabefehler, die durch Fehlerursachen klassifiziert sind, aufweisen, wobei die Übergabeversuche durch die mit der Zelle (35) verbundenen mobilen Endgeräte (10) vorgenommen werden, um Übergaben zu den als Übergabeziele dienenden Nachbarzellen auszuführen.

**11.** Funkkommunikationssystem nach Anspruch 10, wobei

der Funkparameter eine Nachbarzellenliste ist, welche die spezifische Nachbarzelle angibt.

**12.** Funkkommunikationssystem nach Anspruch 11, welche ferner eine umgebende Basisstation aufweist, die dafür ausgelegt ist, eine umgebende Zelle, die sich um die Zelle (35) herum befindet, zu verwalten, wobei der Faktor eine Nachbarbeziehung zwischen der Zelle (35) und der umgebenden Zelle ist.

**13.** Funkkommunikationssystem nach Anspruch 12, wobei

der Funkparameter-Aktualisierungsabschnitt (109) dafür ausgelegt ist, die Nachbarzellen auf der Grundlage von Aktualisierungswerten der Nachbarbeziehung zu extrahieren, und eine vorgegebene Anzahl von Nachbarzellen mit der Nachbarzellenliste in absteigender Reihenfolge der Zuverlässigkeit der Aktualisierungswerte der Nachbarbeziehung zwischen den extrahierten Nachbarzellen und der Zelle (35) registriert.

14. Funkkommunikationssystem nach Anspruch 12, wobei
der Funkparameter-Aktualisierungsabschnitt (109) dafür ausgelegt ist, die Nachbarzellen auf der Grundlage von Anfangswerten und Aktualisierungswerten der Nachbarbeziehung zu extrahieren, und eine vorgegebene Anzahl von Nachbarzellen mit der Nachbarzellenliste in absteigender Reihenfolge der Zuverlässigkeit der Anfangswerte oder Aktualisierungswerte der Nachbarbeziehung zwischen den extrahierten Nachbarzellen und der Zelle (35) registriert.

15. Funkkommunikationssystem nach Anspruch 10, wobei
der Funkparameter ein Schwellenwert für Differenzen zwischen einem Wert, der die Funkkanalqualität der Zelle (35) repräsentiert, und Werten, welche die Funkkanalqualität der Nachbarzellen repräsentieren, ist, und,
wenn die Differenz zwischen dem Wert, der die Funkkanalqualität der Zelle (35) repräsentiert, und dem Wert, der die Funkkanalqualität beliebiger der Nachbarzellen repräsentiert, den Schwellenwert überschreitet, die Funkbasisstation (30) die mobilen Endgeräte (10) veranlassen kann, die Funkkanalqualität der Zelle (35) und die Funkkanalqualität der Nachbarzelle mitzuteilen.

16. Funkkommunikationssystem nach Anspruch 15, wobei
die Faktoren ein erster Versatzwert, der die Funkkanalqualität der Zelle (35) repräsentiert, und ein zweiter Versatzwert, der die Funkkanalqualität der spezifischen Nachbarzelle repräsentiert, sind.

17. Funkkommunikationssystem nach Anspruch 16, wobei
der Aktualisierungswert-Berechnungsabschnitt (106) dafür ausgelegt ist, die Übergabefehlerursachen in erste Fehlerursachen, die durch Aktualisieren des ersten Versatzwerts geheilt werden können, und zweite Fehlerursachen, die durch Aktualisieren des zweiten Versatzwerts geheilt werden können, zu klassifizieren, die Gesamtzahl der Übergabefehler getrennt für die ersten und zweiten Fehlerursachen zu tabellieren und einen Aktualisierungswert entweder des ersten oder des zweiten Versatzwerts auf der Grundlage der Betragsbeziehung zwischen der Gesamtzahl der Übergabefehler infolge der ersten und der zweiten Fehlerursachen zu berechnen.

18. Funkkommunikationssystem nach Anspruch 16, wobei
der Aktualisierungswert-Berechnungsabschnitt (106) dafür ausgelegt ist, eine Übergabefehlerrate für jede der Nachbarzellen auf der Grundlage der Anzahl der Übergabeversuche und der Anzahl der Übergabefehler zu berechnen, eine Ungleichmäßigkeit der berechneten Übergabefehlerrate zwischen den Nachbarzellen zu bewerten und auf der Grundlage des Bewertungsergebnisses festzustellen, ob der zweite Versatzwert für alle Nachbarzellen gemeinsam zu berechnen ist oder der zweite Versatzwert für die jeweiligen Nachbarzellen getrennt zu berechnen ist.

19. Funkkommunikationssystem nach Anspruch 18, wobei
der Aktualisierungswert-Berechnungsabschnitt (106) dafür ausgelegt ist, den Grad der Ungleichmäßigkeit der Fehlerrate zwischen den Nachbarzellen unter Verwendung eines Herfindahl-Index oder der Entropie zu quantifizieren und die Ungleichmäßigkeit der Übergabefehlerrate zwischen den Nachbarzellen auf der Grundlage des quantifizierten Grads der Ungleichmäßigkeit der Fehlerrate zwischen den Nachbarzellen zu bewerten.

20. Funkkommunikationssystem, welches Folgendes aufweist:

eine Funkbasisstation (30), die dafür ausgelegt ist, eine Zelle (35) zu verwalten, mobile Endgeräte (10), die dafür ausgelegt sind, sich mit der Zelle (35) zu verbinden und die Funkkanalqualität der Zelle (35) und die Funkkanalqualität spezifischer Nachbarzellen, die in der Nähe der Zelle (35) liegen, zu messen, und ein selbstoptimierendes System (90), das dafür ausgelegt ist, einen Funkparameter an der Funkbasisstation (30) einzustellen, wobei das selbstoptimierende System (90) Folgendes aufweist:

einen Anfangswert-Berechnungsabschnitt (102), der dafür ausgelegt ist, einen Anfangswert eines Bestimmungsfaktors des Funkparameters zu berechnen, einen Aktualisierungswert-Berechnungsabschnitt (106), der dafür ausgelegt ist, einen Aktualisierungswert des Faktors auf der Grundlage von Kommunikationsverkehrsstatistikinformationen der Zelle (35) und der Nachbarzellen und von Funkkanalqualitätsinformationen, welche die von den mobilen Endgeräten (10) gemessene Funkkanalqualität angeben, zu berechnen,

einen Zuverlässigkeitsbewertungsabschnitt (107), der dafür ausgelegt ist, die Zuverlässigkeit des vom Anfangswert-Berechnungsabschnitt berechneten Anfangswerts des Faktors und die Zuverlässigkeit des vom Aktualisierungswert-Berechnungsabschnitt berechneten Aktualisierungswerts des Faktors zu bewerten,

einen Aktualisierungsbestimmungsabschnitt (108), der dafür ausgelegt ist, die Anwendung eines gewichteten Durchschnittswerts des Anfangswerts und des Aktualisierungswerts des Faktors, der unter Verwendung der durch den Zuverlässigkeitsbewertungsabschnitt bewerteten Zuverlässigkeit des Anfangswerts und des Aktualisierungswerts des Faktors berechnet wurde, auf die Funkbasisstation (30) festzulegen, und

einen Funkparameter-Aktualisierungsabschnitt (109), der dafür ausgelegt ist, den durch den gewichteten Durchschnittswert bestimmten Funkparameter an der Funkbasisstation (30) einzustellen, wenn festgestellt wird, dass der gewichtete Durchschnittswert auf die Funkbasisstation (30) anzuwenden ist,

wobei der Zuverlässigkeitsbewertungsabschnitt (107) dafür ausgelegt ist, die Zuverlässigkeit des Aktualisierungswerts des Faktors als eine Ausgabe einer Bewertungsfunktion zu berechnen, welche als Eingaben die Anzahl der mobilen Endgeräte (10), die mit der Zelle (35) verbunden sind, oder die Anzahl der von den mobilen Endgeräten (10) empfangenen Mitteilungen über die Funkkanalqualitätsinformationen entgegennimmt.

21. Selbstoptimierendes System (90) zum Einstellen eines Funkparameter an einer Funkbasisstation (30), welche eine Zelle (35) verwaltet, welches Folgendes aufweist:

einen Aktualisierungswert-Berechnungsabschnitt (106), der dafür ausgelegt ist, einen Aktualisierungswert eines Bestimmungsfaktors des Funkparameters auf der Grundlage von Verkehrsstatistikinformationen der Zelle (35) und von Nachbarzellen, die in der Nähe der Zelle (35) liegen, und von Funkkanalqualitätsinformationen, welche die Funkkanalqualität der Zelle (35) und die Funkkanalqualität einer spezifischen der Nachbarzellen angeben, zu berechnen, wobei die Funkkanalqualität durch mobile Endgeräte (10), die mit der Zelle (35) verbunden sind, gemessen wird,

einen Zuverlässigkeitsbewertungsabschnitt (107), der dafür ausgelegt ist, die Zuverlässigkeit des durch den Aktualisierungswert-Berechnungsabschnitt (106) berechneten Aktualisierungswerts des Faktors zu bewerten,

einen Aktualisierungsbestimmungsabschnitt (108), der dafür ausgelegt ist, auf der Grundlage des Bewertungsergebnisses des Zuverlässigkeitsbewertungsabschnitts (107) festzustellen, ob der Aktualisierungswert des Faktors auf die Funkbasisstation (30) anzuwenden ist, und

einen Funkparameter-Aktualisierungsabschnitt (109), der dafür ausgelegt ist, den durch den Aktualisierungswert des Faktors bestimmten Funkparameter in der Funkbasisstation (30) einzustellen, wenn festgestellt wird, dass der Aktualisierungswert des Faktors auf die Funkbasisstation (30) anzuwenden ist,

wobei der Zuverlässigkeitsbewertungsabschnitt (107) dafür ausgelegt ist, die Zuverlässigkeit des Aktualisierungswerts des Faktors als eine Ausgabe einer Bewertungsfunktion zu berechnen, welche als Eingaben die Anzahl der mobilen Endgeräte (10), die mit der Zelle (35) verbunden sind, oder die Anzahl der Mitteilungen der Funkkanalqualitätsinformationen, die von den mobilen Endgeräten (10) empfangen werden, entgegennimmt, und

wobei der Aktualisierungsbestimmungsabschnitt (108) dafür ausgelegt ist, festzustellen, dass der Aktualisierungswert des Faktors auf die Funkbasisstation (30) anzuwenden ist, wenn das Bewertungsergebnis des Zuverlässigkeitsbewertungsabschnitts (107) größer als ein vorgegebener Schwellenwert ist.

22. Funkbasisstation (30) zum Verwalten einer Zelle (35) und zum Einstellen eines Funkparameters der Funkbasisstation (30), welche Folgendes aufweist:

einen Aktualisierungswert-Berechnungsabschnitt (106), der dafür ausgelegt ist, einen Aktualisierungswert eines Bestimmungsfaktors des Funkparameters auf der Grundlage von Verkehrsstatistikinformationen der Zelle (35) und von Nachbarzellen, die in der Nähe der Zelle (35) liegen, und von Funkkanalqualitätsinformationen, welche die Funkkanalqualität der Zelle (35) und die Funkkanalqualität einer spezifischen der Nachbarzellen angeben, zu berechnen, wobei die Funkkanalqualität durch mobile Endgeräte (10), die mit der Zelle (35) verbunden sind, gemessen wird,

einen Zuverlässigkeitsbewertungsabschnitt (107), der dafür ausgelegt ist, die Zuverlässigkeit des durch den Aktualisierungswert-Berechnungsabschnitt (106) berechneten Aktualisierungswerts des Faktors zu bewerten,

einen Aktualisierungsbestimmungsabschnitt (108), der dafür ausgelegt ist, auf der Grundlage des Bewertungsergebnisses des Zuverlässigkeitsbewertungsabschnitts (107) festzustellen, ob der Aktualisierungswert des Faktors auf die Funkbasisstation (30) anzuwenden ist, und einen Funkparameter-Aktualisierungsabschnitt (109), der dafür ausgelegt ist, den durch den Aktualisierungswert des Faktors bestimmten Funkparameter in der Funkbasisstation (30) einzustellen, wenn festgestellt wird, dass der Aktualisierungswert des Faktors auf die Funkbasisstation (30) anzuwenden ist,

wobei der Zuverlässigkeitsbewertungsabschnitt (107) dafür ausgelegt ist, die Zuverlässigkeit des Aktualisierungswerts des Faktors als eine Ausgabe einer Bewertungsfunktion zu berechnen, welche als Eingaben die Anzahl der mobilen Endgeräte (10), die mit der Zelle (35) verbunden sind, oder die Anzahl der Mitteilungen der Funkkanalqualitätsinformationen, die von den mobilen Endgeräten (10) empfangen werden, entgegennimmt, und wobei der Aktualisierungsbestimmungsabschnitt (108) dafür ausgelegt ist, festzustellen, dass der Aktualisierungswert des Faktors auf die Funkbasisstation (30) anzuwenden ist, wenn das Bewertungsergebnis des Zuverlässigkeitsbewertungsabschnitts (107) größer als ein vorgegebener Schwellenwert ist.

23. Verfahren zur Einstellung von Funkparametern, das auf ein selbstoptimierendes System (90) zur Einstellung eines Funkparameters an einer Funkbasisstation (30), welche eine Zelle (35) verwaltet, angewendet wird, wobei das Verfahren zur Einstellung von Funkparametern Folgendes aufweist:

Berechnen (S103) eines Aktualisierungswerts eines Bestimmungsfaktors des Funkparameters auf der Grundlage von Verkehrsstatistikinformationen der Zelle (35) und von Nachbarzellen, die in der Nähe der Zelle (35) liegen, und von Funkkanalqualitätsinformationen, welche die Funkkanalqualität der Zelle (35) und die Funkkanalqualität einer spezifischen der Nachbarzellen angeben, wobei die Funkkanalqualität von mobilen Endgeräten (10), die mit der Zelle (35) verbunden sind, gemessen wird, Bewerten (S104) der Zuverlässigkeit des berechneten Aktualisierungswerts des Bestimmungsfaktors, Feststellen (S105), ob der Aktualisierungswert des Faktors auf die Funkbasisstation (30) anzuwenden ist, auf der Grundlage eines Bewertungsergebnisses und Einstellen (S106) des durch den Aktualisierungswert des Faktors bestimmten Funkparameters an der Funkbasisstation (30), wenn festgestellt wird, dass der Aktualisierungswert des Faktors auf die Funkbasisstation (30) anzuwenden ist,

wobei bei der Bewertung der Zuverlässigkeit die Zuverlässigkeit des Aktualisierungswerts des Faktors als eine Ausgabe einer Bewertungsfunktion berechnet wird (S103), welche als Eingaben die Anzahl der mobilen Endgeräte (10), die mit der Zelle (35) verbunden sind, oder die Anzahl der Mitteilungen der Funkkanalqualitätsinformationen, die von den mobilen Endgeräten (10) empfangen wurden, entgegennimmt, und wobei bei der Feststellung (S105), ob der Aktualisierungswert anzuwenden ist, festgestellt wird, dass der Aktualisierungswert des Faktors auf die Funkbasisstation (30) anzuwenden ist, wenn das Bewertungsergebnis anhand der Bewertungszuverlässigkeit größer als ein vorgegebener Schwellenwert ist.

## Revendications

1. Système de communication radio comprenant :

une station de base radio (30) qui est configurée pour gérer une cellule (35), des terminaux mobiles (10) qui sont configurés pour se connecter à la cellule (35) et mesurer la qualité de canal radio de la cellule (35) et la qualité de canal radio de cellules voisines spécifiques de cellules voisines qui sont au voisinage de la cellule (35), et un système d'auto-optimisation (90) qui est configuré pour régler un paramètre radio sur ladite station de base radio (30), dans lequel ledit système d'auto-optimisation (90) comprend :

une section de calcul de valeur de mise à jour (106) configurée pour calculer une valeur de mise à jour d'un facteur déterminant du paramètre radio sur la base d'informations de statistiques de trafic de communication de la cellule (35) et des cellules voisines et d'informations de qualité de canal radio qui indiquent la qualité de canal radio mesurée par lesdits terminaux mobiles (10) ; une section d'évaluation de fiabilité (107) configurée pour évaluer la fiabilité de la valeur de mise à jour du facteur calculée par ladite section de calcul de valeur de mise à jour (106) ; une section de détermination de mise à jour (108) configurée pour déterminer s'il faut ou non appliquer la valeur de mise à jour du facteur à ladite station de base radio (30), sur la base du résultat d'évaluation par ladite section d'évaluation de fiabilité (107) ; et

une section de mise à jour de paramètre radio (109) configurée pour régler le paramètre radio déterminé par la valeur de mise à jour du facteur dans ladite station de base radio (30) lorsqu'il est déterminé que la valeur de mise à jour du facteur doit être appliquée à ladite station de base radio (30) ;

dans lequel ladite section d'évaluation de fiabilité (107) est configurée pour calculer la fiabilité de la valeur de mise à jour du facteur en tant que sortie d'une fonction d'évaluation qui saisit le nombre de terminaux mobiles (10) connectée à la cellule (35) ou le nombre de rapports des informations de qualité de canal radio reçues à partir des terminaux mobiles (10) ; et dans lequel la section de détermination de mise à jour (108) est configurée pour déterminer l'application de la valeur de mise à jour du facteur à ladite station de base radio (30) lorsque le résultat d'évaluation par ladite section d'évaluation de fiabilité (107) est plus grand qu'un seuil prédéterminé.

2. Système de communication radio selon la revendication 1, dans lequel
les informations de qualité de canal radio comprennent au moins l'un parmi une puissance reçue de signaux pilotes transmis par la cellule (35) et les cellules voisines et un rapport du signal à l'interférence de signaux pilotes transmis par la cellule (35) et les cellules voisines.

3. Système de communication radio selon la revendication 2, dans lequel
le nombre de terminaux mobiles (10) connectés à la cellule (35), ledit nombre étant saisi dans la fonction d'évaluation, est défini par une zone de couverture qui représente un champ d'application géographique de la cellule (35) tandis que le nombre de rapports des informations de qualité de canal radio, lesdits rapports étant envoyés à partir desdits terminaux mobiles (10) et ledit nombre étant saisi dans la fonction d'évaluation, est défini par une zone de chevauchement de la couverture de la cellule (35) et de la couverture des cellules voisines.

4. Système de communication radio selon l'une quelconque des revendications 1 à 3, dans lequel
ledit système d'auto-optimisation (90) comprend en outre
une section de calcul de valeur initiale (102) configurée pour calculer une valeur initiale du facteur.

5. Système de communication radio selon la revendication 4, dans lequel
ladite section de calcul de valeur initiale (102) est configurée pour calculer la valeur initiale du facteur sur la base des informations de la station de base radio (30) comprenant au moins une position d'installation de ladite station de base radio (30).

6. Système de communication radio selon la revendication 4 ou 5, dans lequel
ladite section d'évaluation de fiabilité (102) est configurée pour calculer la fiabilité de la valeur initiale du facteur en tant que sortie d'une fonction d'évaluation qui saisit la zone de chevauchement de la couverture de la cellule (35) et de la couverture des cellules voisines.

7. Système de communication radio selon la revendication 6, dans lequel
ladite section de détermination de mise à jour (108) est configurée pour déterminer s'il faut ou non appliquer la valeur de mise à jour à ladite station de base radio (30) sur la base d'une relation de grandeurs entre la fiabilité de la valeur initiale du facteur et la fiabilité de la valeur de mise à jour du facteur.

8. Système de communication radio selon la revendication 7, dans lequel :

lorsqu'il est déterminé, par ladite section de détermination de mise à jour (108), de ne pas appliquer la valeur de mise à jour du facteur à ladite station de base radio (30), ladite section de mise à jour de paramètre radio (109) est configurée pour déterminer le paramètre radio sur la base de la valeur initiale du facteur.

9. Système de communication radio selon la revendication 8, dans lequel
ladite section de mise à jour de paramètre radio (109) est configurée pour effectuer un calcul prédéterminé sur la fiabilité de la valeur initiale du facteur et la fiabilité de la valeur de mise à jour du facteur et désigner une valeur calculée en tant que fiabilité de la valeur à appliquer à ladite station de base radio (30), lorsque la valeur initiale ou la valeur de mise à jour est appliquée, et l'autre n'est pas appliquée, à ladite station de base radio (30).

10. Système de communication radio selon l'une quelconque des revendications 1 à 9, dans lequel :

alors que chacun desdits terminaux mobiles (10) se déplace, ledit terminal mobile (10) est configuré pour effectuer un transfert afin de changer une cellule radio connectée (35) ; et les informations de statistiques de trafic de communication comprennent au moins l'un parmi le nombre de tentatives de transfert, le nombre de défaillances de transfert et le nombre de défaillances de transfert classées par causes de défaillances, lorsque les tentatives de transfert sont réalisées par lesdits terminaux mobiles (10) connectés à la cellule (35) pour effectuer des transferts vers les cellules voisines servant de destinations de transfert.

11. Système de communication radio selon la revendication 10, dans lequel
le paramètre radio est une liste de cellules voisines qui indique la cellule voisine spécifique.

12. Système de communication radio selon la revendication 11, comprenant en outre une station de base environnante qui est configurée pour gérer une cellule environnante située autour de la cellule (35), dans lequel le facteur est une relation de voisinage entre la cellule (35) et la cellule environnante.

13. Système de communication radio selon la revendication 12, dans lequel
ladite section de mise à jour de paramètre radio (109) est configurée pour extraire les cellules voisines sur la base de valeurs de mise à jour de la relation de voisinage et enregistre un nombre prédéterminé de cellules voisines avec la liste de cellules voisines dans l'ordre de fiabilité décroissant des valeurs de mise à jour de la relation de voisinage entre les cellules voisines extraites et la cellule (35).

14. Système de communication radio selon la revendication 12, dans lequel
ladite section de mise à jour de paramètre radio (109) est configurée pour extraire les cellules voisines sur la base de valeurs initiales et de valeurs de mise à jour de la relation de voisinage et enregistre un nombre prédéterminé de cellules voisines avec la liste de cellules voisines dans l'ordre de fiabilité décroissant des valeurs initiales ou des valeurs de mise à jour de la relation de voisinage entre les cellules voisines extraites et la cellule (35).

15. Système de communication radio selon la revendication 10, dans lequel
le paramètre radio est un seuil pour des différences entre une valeur qui représente la qualité de canal radio de la cellule (35) et des valeurs qui représentent la qualité de canal radio des cellules voisines ; et lorsque la différence entre la valeur qui représente la qualité de canal radio de la cellule (35) et la valeur qui représente la qualité de canal radio de l'une quelconque des cellules voisines dépasse le seuil, ladite station de base radio (30) est configurée pour faire en sorte que lesdits terminaux mobiles (10) rapportent la qualité de canal radio de la cellule (35) et la qualité de canal radio de la cellule voisine.

16. Système de communication radio selon la revendication 15, dans lequel
les facteurs sont une première valeur décalée qui représente la qualité de canal radio de la cellule (35) et une seconde valeur décalée qui représente la qualité de canal radio de la cellule voisine spécifique.

17. Système de communication radio selon la revendication 16, dans lequel
ladite section de calcul de valeur de mise à jour (106) est configurée pour classer les causes des défaillances de transfert en premières causes de défaillances auxquelles on peut remédier en mettant à jour la première valeur décalée et en secondes causes de défaillances auxquelles on peut remédier en mettant à jour la seconde valeur décalée, tabuler le nombre total de défaillances de transfert séparément pour les premières et secondes causes de défaillance, et calculer une valeur de mise à jour des première ou seconde valeurs décalées sur la base d'une relation de grandeurs entre le nombre total de défaillances de transfert dues aux premières et secondes causes de défaillances.

18. Système de communication radio selon la revendication 16, dans lequel
ladite section de calcul de valeur de mise à jour (106) est configurée pour calculer un taux de défaillances de transfert pour chacune des cellules voisines sur la base du nombre de tentatives de transfert et du nombre de défaillances de transfert, évaluer une inégalité dans le taux calculé de défaillances de transfert parmi les cellules voisines, et déterminer sur la base d'un résultat de l'évaluation s'il faut calculer la seconde valeur décalée pour toutes les cellules voisines en commun ou calculer la seconde valeur décalée séparément pour chacune des cellules voisines.

19. Système de communication radio selon la revendication 18, dans lequel
ladite section de calcul de valeur de mise à jour (106) est configurée pour quantifier le degré d'inégalité du taux de défaillances parmi les cellules voisines en utilisant un indice ou une entropie d'Herfindahl et évaluer l'inégalité du taux de défaillances de transfert parmi les cellules voisines sur la base du degré d'inégalité quantifié dans le taux de défaillances parmi les cellules voisines.

20. Système de communication radio comprenant :

une station de base radio (30) qui est configurée pour gérer une cellule (35), des terminaux mobiles (10) qui sont configurés pour se connecter à la cellule (35) et mesurer la qualité de canal radio de la cellule (35) et la qualité de canal radio de cellules voisines spécifiques de cellules voisines qui sont au voisinage de la cellule (35), et un système d'auto-optimisation (90) qui est configuré pour régler un paramètre radio sur ladite station de base radio (30), dans lequel ledit système d'auto-optimisation (90) comprend :

une section de calcul de valeur initiale (102) configurée pour calculer une valeur initiale d'un facteur déterminant du paramètre radio ;

une section de calcul de valeur de mise à jour (106) configurée pour calculer une valeur de mise à jour du facteur sur la base d'informations de statistiques de trafic de communication de la cellule (35) et des cellules voisines et d'informations de qualité de canal radio qui indiquent la qualité de canal radio mesurée par lesdits terminaux mobiles (10) ;

une section d'évaluation de fiabilité (107) configurée pour évaluer la fiabilité de la valeur initiale du facteur calculée par ladite section de calcul de valeurs initiales et la fiabilité de la valeur de mise à jour du facteur calculée par ladite section de calcul de valeur de mise à jour ;

une section de détermination de mise à jour (108) configurée pour déterminer l'application d'une valeur moyenne pondérée de la valeur initiale et de la valeur de mise à jour du facteur calculée en utilisant la fiabilité de la valeur initiale et de la valeur de mise à jour du facteur évaluée par ladite section d'évaluation de fiabilité à ladite section de base radio (30) ; et

une section de mise à jour de paramètre radio (109) configurée pour régler le paramètre radio déterminé par la valeur moyenne pondérée sur ladite station de base radio (30) lorsqu'il est déterminé que la valeur moyenne pondérée doit être appliquée à ladite station de base radio (30) ;

dans lequel ladite section d'évaluation de fiabilité (107) est configurée pour calculer la fiabilité de la valeur de mise à jour du facteur en tant que sortie d'une fonction d'évaluation qui saisit le nombre de terminaux mobiles (10) connectés à la cellule (35) ou le nombre de rapports des informations de qualité de canal radio reçues à partir des terminaux mobiles (10).

21. Système d'auto-optimisation (90) pour régler un paramètre radio sur une station de base radio (30) qui gère une cellule (35), comprenant :

une section de calcul de valeur de mise à jour (106) configurée pour calculer une valeur de mise à jour d'un facteur déterminant du paramètre radio sur la base d'informations de statistiques de trafic de la cellule (35) et des cellules voisines qui se situent au voisinage de la cellule (35) et d'informations de qualité de canal radio qui indiquent la qualité de canal radio de la cellule (35) et la qualité de canal radio d'une cellule voisine spécifique parmi les cellules voisines, lorsque la qualité de canal radio est mesurée par des terminaux mobiles (10) connectés à la cellule (35) ;

une section d'évaluation de fiabilité (107) configurée pour évaluer la fiabilité de la valeur de mise à jour du facteur calculé par ladite section de calcul de valeur de mise à jour (106) ;

une section de détermination de mise à jour (108) configurée pour déterminer s'il faut appliquer ou non la valeur de mise à jour du facteur à ladite station de base radio (30), sur la base d'un résultat d'évaluation par ladite section d'évaluation de fiabilité (107) ; et

une section de mise à jour de paramètre radio (109) configurée pour régler le paramètre radio déterminé par la valeur de mise à jour du facteur dans ladite station de base radio (30) lorsqu'il est déterminé que la valeur de mise à jour du facteur doit être appliquée à ladite station de base radio (30) ;

dans lequel ladite section d'évaluation de fiabilité (107) est configurée pour calculer la fiabilité de la valeur de mise à jour du facteur en tant que sortie d'une fonction d'évaluation qui saisit le nombre de terminaux mobiles (10) connectés à la cellule (35) ou le nombre de rapport des informations de qualité de canal radio reçues à partir des terminaux mobiles (10) ; et

dans lequel la section de détermination de mise à jour (108) est configurée pour déterminer l'application de la valeur de mise à jour du facteur à ladite station de base radio (30) lorsque le résultat d'évaluation par ladite section d'évaluation de fiabilité (107) est plus grand qu'un seuil prédéterminé.

22. Station de base radio (30) pour gérer une cellule (35) et régler un paramètre radio de la station de base radio (30), comprenant :

une section de calcul de valeur de mise à jour (106) configurée pour calculer une valeur de mise à jour d'un facteur déterminant du paramètre radio sur la base d'informations de statistiques de trafic de la cellule (35) et des cellules voisines qui sont au voisinage de la cellule (35) et d'informations de qualité de canal radio qui indiquent la qualité de canal radio de la cellule (35) et la qualité de canal radio d'une cellule voisine spécifique parmi les cellules voisines, où la qualité de canal radio est mesurée par des terminaux mobiles (10) connectés à la cellule (35) ;

une section d'évaluation de fiabilité (107) configurée pour évaluer la fiabilité de la valeur de mise à jour du facteur calculée par ladite section de calcul de valeur de mise à jour (106) ;

une section de détermination de mise à jour (108) configurée pour déterminer s'il faut appliquer ou non la valeur de mise à jour du facteur à la station de base radio (30), sur la base d'un résultat d'évaluation par ladite section d'évaluation de fiabilité (107) ; et

une section de mise à jour de paramètre radio (109) configurée pour régler le paramètre radio déterminé par la valeur de mise à jour du facteur dans la station de base radio (30) lorsqu'il est déterminé que la valeur de mise à jour du facteur doit être appliquée à ladite station de base radio (30) ;

dans lequel ladite section d'évaluation de fiabilité (107) est configurée pour calculer la fiabilité de la valeur de mise à jour du facteur en tant que sortie d'une fonction d'évaluation qui saisit le nombre de terminaux mobiles (10) connectés à la cellule (35) ou le nombre de rapports des informations de qualité de canal radio reçues à partir des terminaux mobiles (10) ; et

dans lequel la section de détermination de mise à jour (108) est configurée pour déterminer l'application de la valeur de mise à jour du facteur à ladite station de base radio (30) lorsque le résultat d'évaluation par ladite section de fiabilité (107) est plus grand qu'un seuil prédéterminé.

23. Procédé de réglage de paramètre radio qui est appliqué à un système d'auto-optimisation (90) pour régler un paramètre radio sur une station de base radio (30) qui gère une cellule (35), le procédé de réglage de paramètre radio comprenant :

le calcul (S103) d'une valeur de mise à jour d'un facteur déterminant du paramètre radio sur la base d'informations de statistiques de trafic de la cellule (35) et de cellules voisines qui se situent au voisinage de la cellule (35) et d'informations de qualité de canal radio qui indiquent la qualité de canal radio de la cellule (35) et la qualité de canal radio d'une cellule voisine spécifique parmi les cellules voisines, lorsque la qualité de canal radio est mesurée par des terminaux mobiles (10) connectés à la cellule (35) ;

l'évaluation (S104) de la fiabilité de la valeur de mise à jour calculée du facteur déterminant ;

la détermination (S105) du fait qu'il faille ou non appliquer la valeur de mise à jour du facteur à ladite station de base radio (30), sur la base d'un résultat d'évaluation ; et

le réglage (S106) du paramètre radio déterminé par la valeur de mise à jour du facteur sur ladite station de base radio (30) lorsqu'il est déterminé que la valeur de mise à jour du facteur doit être appliquée à ladite station de base radio (30) ;

dans lequel ladite évaluation de la fiabilité comprend le calcul (S103) de la fiabilité de la valeur de mise à jour du facteur en tant que sortie d'une fonction d'évaluation qui saisit le nombre de terminaux mobiles (10) connectés à la cellule (35) ou le nombre de rapports des informations de qualité de canal radio reçues à partir des terminaux mobiles (10) ; et

dans lequel la détermination (S105) du fait qu'il faille ou non appliquer la valeur de mise à jour comprend la détermination de l'application de la valeur de mise à jour du facteur à ladite station de base radio (30) lorsque le résultat d'évaluation par ladite évaluation de la fiabilité est plus grand qu'un seuil prédéterminé.

Fig.1

Fig.2

Fig.3

Fig.4

## Fig.5

External network `70`

`60`

Mobile communication core network `50`

`85`

Self-optimizing system `90`

`40` `40` `40`  `80` `80` `80`

`30` Radio base station

`30` Radio base station

`30` Radio base station

`20` `20`   `20`   `20` `20`

`10` Mobile terminal   `10`

`10`

`10`   `10`

`35` Radio cell   `35`   `35`

EP 2 501 172 B1

Fig.6

| Source Cell | Target Cell | | Measurement information | Communication statistics | Update value |
|---|---|---|---|---|---|
| | ID No. | Class | No. of reports | No. of HO attempts | Neighbor relationship |
| Cell S | Cell $T_1$ | Listed | $\cdots$ | $a_1$ | Neighbor |
| | Cell $T_2$ | Detected | $n_2$ | $\cdots$ | Neighbor |
| | Cell $T_3$ | Listed | $\cdots$ | $a_3$ | Non-neighbor |
| | $\cdots$ | $\cdots$ | $\cdots$ | $\cdots$ | $\cdots$ |
| | Cell $T_N$ | Detected | $n_N$ | $\cdots$ | Non-neighbor |

Fig.7

100 Self-optimizing system

Fig.8

Fig.9

| Source Cell | Target Cell | No. of attempts | No. of failures | Classification of failures | | |
|---|---|---|---|---|---|---|
| | | | | Cause 1 | ... | Cause K |
| Cell S | Cell $T_1$ | $a_1$ | $f_1$ | $c_{11}$ | ... | $c_{1k}$ |
| | Cell $T_2$ | $a_2$ | $f_2$ | $c_{21}$ | ... | $c_{2k}$ |
| | Cell $T_3$ | $a_3$ | $f_3$ | $c_{31}$ | ... | $c_{3k}$ |
| | ... | ... | ... | ... | ... | ... |
| | Cell $T_M$ | $a_M$ | $f_M$ | $c_{M1}$ | | $c_{Mk}$ |

Fig.10

Fig.11A

Reliability evaluation function (neighbor)

Fig.11B

Function of threshold $Th_n$

Fig.11C

Reliability evaluation function (non-neighbor)

Fig.11D

Function of threshold $Th_m$

Fig.12

| Source Cell | Target Cell | Initial value | Update value | | Setting | |
|---|---|---|---|---|---|---|
| | | Neighbor relationship | Neighbor relationship | Reliability R | Neighbor relationship | Reliability R |
| Cell S | Cell $T_1$ | Non-neighbor | Neighbor | 0.1 | Non-neighbor | Th (=0.4) |
| | Cell $T_2$ | Neighbor | Non-neighbor | 0.6 | Non-neighbor | 0.6 |
| | Cell $T_3$ | Non-neighbor | Neighbor | 2.0 | Neighbor | 2.0 |
| | ... | ... | ... | ... | ... | ... |
| | Cell $T_N$ | Neighbor | Neighbor | 0.3 | Neighbor | Th (=0.4) |

Fig.13

| Source Cell | Target Cell | Initial value | Update value | | Setting |
|---|---|---|---|---|---|
| | | Offset value | Offset value | Reliability R | Offset value |
| Cell S | Cell $T_1$ | 0 | 0.5 | 0.1 | 0 |
| | Cell $T_2$ | 0 | 1.0 | 0.6 | 1.0 |
| | Cell $T_3$ | 0 | -0.5 | 2.0 | -0.5 |
| | ... | ... | ... | ... | ... |
| | Cell $T_M$ | 0 | 0 | 0.3 | 0 |

Fig.14

200 Self-optimizing system

Fig.15

```
                    ┌─────────┐
                    │  Start  │
                    └────┬────┘
                         │
              ┌──────────▼──────────┐
              │ Determine initial   │ ──S100
              │ value of radio      │
              │ parameter           │
              └──────────┬──────────┘
                         │
              ┌──────────▼──────────┐
              │ Initialize radio    │ ──S101
              │ parameter           │
              └──────────┬──────────┘
                         │              S102
                    ┌────▼────┐
         ┌─────────◄  Radio channel      NO
         │          quality deteriorated? ►──
         │          └────┬────┘
         │               │ YES
         │    ┌──────────▼──────────────┐
         │    │ Calculate update value  │ ──S103
         │    │ based on radio channel  │
         │    │ quality measurement     │
         │    │ information and traffic │
         │    │ statistics information  │
         │    └──────────┬──────────────┘
         │               │
         │    ┌──────────▼──────────┐
         │    │ Evaluate reliability│ ──S104
         │    │ R of update value   │
         │    └──────────┬──────────┘
         │               │
         │    ┌──────────▼──────────┐
         │    │ Evaluates reliability│ ──S110
         │    │ R₀ of initial value  │
         │    └──────────┬──────────┘
   S106  │               │        S111
 ┌───────┴────────┐  ┌───▼───┐
 │ Set radio      │◄─┤ R>R₀? │
 │ parameter on   │YES└───┬───┘
 │ radio base     │       │ NO
 │ station        │   ┌───▼───┐
 └────────────────┘   │  End  │
                      └───────┘
```

Fig.16A

Overlap area $S_i$ of coverages
Reliability of neighbor relationship

Fig.16B

Reliability of offset

Fig.17

| Source Cell | Target Cell | Initial value | | Update value | | Setting | |
|---|---|---|---|---|---|---|---|
| | | Neighbor relationship | Reliability R | Neighbor relationship | Reliability R | Neighbor relationship | Reliability R' |
| Cell S | Cell $T_1$ | Non-neighbor | 1.0 | Neighbor | 0.1 | Non-neighbor | 1.0 |
| | Cell $T_2$ | Neighbor | 0.6 | Non-neighbor | 0.8 | Non-neighbor | 0.8 |
| | Cell $T_3$ | Non-neighbor | 0.3 | Neighbor | 2.0 | Neighbor | 2.0 |
| | ⋮ | ⋮ | ⋮ | ⋮ | ⋮ | ⋮ | ⋮ |
| | Cell $T_N$ | Neighbor | 0.5 | Neighbor | 0.3 | Neighbor | 0.5 |

Fig.18

| Source Cell | Target Cell | Initial value | | Update value | | Setting | |
|---|---|---|---|---|---|---|---|
| | | Offset value | Reliability $R_0$ | Offset value | Reliability $R$ | Offset value | Reliability $R'$ |
| Cell S | Cell $T_1$ | 0 | 0.8 | 0.5 | 0.1 | 0 | 0.8 |
| | Cell $T_2$ | 0 | 0.3 | 1.0 | 0.6 | 1.0 | 0.6 |
| | Cell $T_3$ | 0 | 0.5 | −0.5 | 2.0 | −0.5 | 2.0 |
| | ... | ... | ... | ... | ... | ... | ... |
| | Cell $T_M$ | 0 | 0.2 | 0 | 0.3 | 0 | 0.3 |

EP 2 501 172 B1

Fig.19

| Source Cell | Target Cell | Initial value | | Update value | | Setting | |
|---|---|---|---|---|---|---|---|
| | | Neighbor relationship | Reliability $R_0$ | Neighbor relationship | Reliability R | Neighbor relationship | Reliability R' |
| Cell S | Cell $T_1$ | Non-neighbor | 1.0 | Neighbor | 0.1 | Non-neighbor | 0.9 |
| | Cell $T_2$ | Neighbor | 0.6 | Non-neighbor | 0.8 | Non-neighbor | 0.2 |
| | Cell $T_3$ | Non-neighbor | 0.3 | Neighbor | 2.0 | Neighbor | 1.7 |
| | ... | ... | ... | ... | ... | ... | ... |
| | Cell $T_N$ | Neighbor | 0.5 | Neighbor | 0.3 | Neighbor | 0.8 |

Fig.20

| Source Cell | Target Cell | Initial value | | Update value | | Setting | |
|---|---|---|---|---|---|---|---|
| | | Offset value | Reliability $R_0$ | Offset value | Reliability $R$ | Offset value | Reliability $R'$ |
| Cell S | Cell $T_1$ | 0 | 0.8 | 0.5 | 0.1 | 0 | 0.7 |
| | Cell $T_2$ | 0 | 0.3 | 1.0 | 0.6 | 1.0 | 0.3 |
| | Cell $T_3$ | 0 | 0.5 | −0.5 | 2.0 | −0.5 | 1.5 |
| | ... | ... | ... | ... | ... | ... | ... |
| | Cell $T_M$ | 0 | 0.2 | 0 | 0.3 | 0 | 0.5 |

Fig.21

| Source Cell | Target Cell | Initial value | | Update value | | Setting | |
|---|---|---|---|---|---|---|---|
| | | Offset value | Reliability $R_0$ | Offset value | Reliability $R$ | Offset value | Reliability $R'$ |
| Cell S | Cell $T_1$ | 0 | 0.8 | 0.5 | 0.1 | 0.06 | 0.7 |
| | Cell $T_2$ | 0 | 0.3 | 1.0 | 0.6 | 0.67 | 0.3 |
| | Cell $T_3$ | 0 | 0.5 | -0.5 | 2.0 | -0.4 | 1.5 |
| | ... | ... | ... | ... | ... | ... | ... |
| | Cell $T_M$ | 0 | 0.2 | 0 | 0.3 | 0 | 0.5 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9732445 A1
- WO 2009096883 A1

- JP 2009258055 A

**Non-patent literature cited in the description**

- **D. SOLDANI.** Self-optimizing Neighbor Cell List for UTRA FDD Networks Using Detected Set Reporting. IEEE VTC2007, 694, , 698

- Radio Access Network (E-UTRAN); Self-configuring and self-optimizing network use cases and solutions. *3GPP TR 36.902*